# EUROPÄISCHE PATENTSCHRIFT

(11) **EP 1 819 513 B1**
(45) Veröffentlichungstag und Bekanntmachung des Hinweises auf die Patenterteilung: **25.05.2011**
(21) Anmeldenummer: 05818961.4
(22) Anmeldetag: 09.12.2005
(51) Int. Cl.: B41F 13/20, F16F 15/02

(54) **ANORDNUNG EINES ZYLINDERS EINER BAHNVERARBEITENDEN MASCHINE ZUR SCHWINGUNGSREDUKTION DES ZYLINDERS**
DEVICE FOR REDUCING VIBRATION
DISPOSITIF POUR REDUIRE LES VIBRATIONS

(30) Priorität: 10.12.2004 DE 102004059849
(43) Veröffentlichungstag der Anmeldung: 22.08.2007
(73) Patentinhaber: Koenig & Bauer Aktiengesellschaft, 97080 Würzburg (DE)
(72) Erfinder: CHRISTEL, Ralf, 97209 Veitshöchheim (DE); HAHN, Oliver, Frank, 97209 Veitshöchheim (DE); SCHASCHEK, Karl, Erich Albert, 97289 Thüngen (DE)
(86) Internationale Anmeldenummer: PCT/EP2005/056644
(87) Internationale Veröffentlichungsnummer: WO 2006/061432

(56) Entgegenhaltungen:
- WO-A-97/03832
- DE-A1- 10 145 322
- DE-A1- 10 255 334
- DE-C1- 10 204 322
- US-A- 6 156 158

## Beschreibung

Die Erfindung betrifft eine Anordnung eines Zylinders einer bahnverarbeitenden Maschine zur Schwingungsreduktion des Zylinders gemäß dem Oberbegriff des Anspruchs 1.

Durch die dem Oberbegriff des Anspruchs 1 entsprechende DE 102 53 997 C1 sind ein Verfahren und eine Vorrichtung zur Verminderung von Schwingungen bekannt, wobei eine Überhöhung im Bereich der Mantelfläche eines rotierenden Bauteils in ihrer Höhe und/oder Lage veränderbar ist.

Die WO 03/064763 A1 offenbart ein Verfahren und eine Vorrichtung zur Verminderung von Schwingungen, wobei mittels Aktoren auf Zapfen und/oder Lager eingewirkt wird. Hierbei erfolgt eine Beaufschlagung eines in Abhängigkeit einer Winkellage des Bauteils vorgehaltenen Signalverlaufs, wobei die vorgehaltenen Steuersignale adaptiv angepasst werden können.

In der DE 196 52 769 A1 ist ein Verfahren zur Dämpfung von Kontaktschwingungen offenbart, wobei auf das Lager oder den Zapfen wirkende Aktoren vorgesehen sind, welche zur Schwingungsdämpfung über einen Regelkreis betrieben werden.

Die EP 03 31 870 A2 offenbart eine Einrichtung zum Lagern von Zylindern, wobei Zapfen eines Zylinders in zwei in axialer Richtung des Zylinders nebeneinander angeordneten Lagern gelagert sind. Mittels Druckmittelzylindern können die Lager einzeln senkrecht zur Rotationsachse bewegt werden um beispielsweise eine Durchbiegung zu kompensieren.

Durch die DE 200 11 948 U1 ist eine Lageranordnung für einen Zylinder einer Druckmaschine bekannt, wobei zur exakten Positionierung des Lagers zwischen dem Außenring und einer Gestellbohrung piezoelektrische Stellelemente angeordnet sind.

In der JP 62-228730 A werden Schwingungen einer rotierenden Welle mittels Piezoelementen reduziert.

Durch die DE 101 07 135 A1 ist ein Verfahren zur Schwingungsdämpfung eines Zylinders einer Druckmaschine bekannt, wobei mittels eines Aktors der Schwingung entgegen wirkende Kräfte aufgebracht werden, welche hinsichtlich ihrer Größe und Richtung in Abhängigkeit der tatsächlich gemessenen Schwingungen gesteuert werden. Hierbei kann eine adaptive Gegensteuerung Anwendung finden, wobei die sich wiederholende Abweichung pro Umdrehung des Zylinders gemessen und durch einen ortsfesten, über die Winkellage des Zylinders zugeordneten Algorithmus die jeweils verbleibende Abweichung bewertet und über die Ansteuerung des Aktors ausgeglichen wird.

Die DE 101 45 322 A1 offenbart einen Zylinder einer Druckmaschine, welcher an- und abstellbar gelagert ist. Hierzu ist dieser in linear bewegbaren Lagerblöcken in Radiallagern gelagert und durch mittelbar auf den Zylinder wirkende Aktoren linear bewegbar.

Durch die WO 03/064763 A1 ist eine Anordnung zur Lagerung von Zylindern bekannt, wobei in einer Ausführung ein Zylinder zur An-/Abstellung linear bewegbar gelagert sein kann. Ein die Stellbewegung begrenzender Anschlag kann durch einen Aktor, der mit der Schwingung entgegenwirkenden Signalen beaufschlagt wird, bewegt werden.

Die JP-A-04 236 819 betrifft die Lagerung einer Welle, wobei ein Lagergehäuse in axialer Richtung schwimmend gelagert ist. Um Biegeschwingungen der Welle entgegenzuwirken sind am Gehäuse Piezoaktoren angeordnet, durch welche auf die Welle eine axial wirkende Kraft aufbringbar ist.

Der Erfindung liegt die Aufgabe zugrunde, eine Anordnung eines Zylinders einer bahnverarbeitenden Maschine zur Schwingungsreduktion des Zylinders zu schaffen.

Die Aufgabe wird erfindungsgemäß durch die Merkmale des Anspruchs 1 gelöst.

Die mit der Erfindung erzielbaren Vorteile bestehen insbesondere darin, dass durch die Vorsteuerung mit einem vordefinierten Kraftverlauf die erforderlichen schnellen Reaktionszeiten und die hohe Dynamik erreichbar ist. Durch Vorbestimmung einer an den Kanalschlagverlauf angepassten Signalverlauf des durch den Aktor zu erzeugenden Kraftstoßes, ist lediglich eine Anpassung der Signalhöhe erforderlich.

Von großem Vorteil ist es auch, dass neben dem Kanalschlag auch die Anregung durch den Aktor selbst mit in den Berechnungsalgorithmus einfließt. Hierdurch ist die Schwingung insgesamt, also auch Moden, welche durch den Aktor selbst verursacht werden, zu reduzieren. Andernfalls besteht die Gefahr, dass zwar eine Eigenmoder der kanalschlagbedingten Zylinderschwingung vermindert, jedoch eine durch den Aktor verursachte Mode vergrößert wird.

Ebenfalls von erheblichem Vorteil ist es, dass - insbesondere unter Berücksichtigung sowohl der sich theoretisch durch den Kanalschlag als auch durch den Aktor erzeugten Schwingung - aus dem Messwert an einem festen Ort am Zylinder-Zapfen-System auf eine am Zylinder vorliegende höchste Amplitude geschlossen wird und diese der iterativen Anpassung der Impulshöhe zugrunde gelegt wird. Der Messwert allein würde lediglich einen Ausschnitt abbilden und dadurch ggf. zu erheblich falschen Rückschlüssen führen.

Besonders vorteilhaft ist die Verfahrensweise durch Lageranordnungen durchführbar, wobei ein Aktor mittelbar (über ein Radiallager oder einen ein Radiallager aufweisenden Lagerblock) oder unmittelbar auf einen Zylinderzapfen wirkt. Von besonderer Bedeutung ist hierbei die Gewährleistung einer hohen Dynamik, welche in einer vorteilhaften Ausführung durch Verwendung eines Piezoaktors erreicht wird. In einer Ausbildung hydraulisch wirkender Aktoren kann dies durch Anordnung von Schnellsteuerventilen im Hydrauliksystem erreicht werden.

Von besonderem Vorteil im Hinblick auf kurze Stellwege und einfache Montage ist auch eine Ausführung einer Lageranordnung des Zylinders, wobei der betreffende Zylinder in Linearlagern an einen zweiten Zylinder an/abstellbar ist. Hierbei sind vorzugsweise sowohl die Linearlagerelemente, das Rotationslager als auch der die Schwingung kompensierende Aktor als Baueinheit in einer als Ganzes montierbaren Lagereinheit angeordnet.

In einer Ausführung, wobei ein der Schwingung entgegengerichteter Aktor vom eine Stellbewegung bewerkstellenden Aktor verschieden ist, ist es vorteilhaft, den erstgenannten Aktor im bewegbaren Teil der Lagerung zu integrieren. Dadurch bleibt die Wirkung des erstgenannten Aktors unabhängig von einer An-/Abstelllage.

Ausführungsbeispiele der Erfindung sind in den Zeichnungen dargestellt und werden im folgenden näher beschrieben.

Es zeigen:
- Fig. 1: eine Draufsicht auf ein Doppeldruckwerk;
- Fig. 2: eine schematische Darstellung eines Nippdurchganges;
- Fig. 3: eine Seitenschnitt durch eine Lagereinheit;
- Fig. 4: ein schematischer Querschnitt durch eine Lagereinheit mit Aktoren;
- Fig. 5: ein Querschnitt durch die Lagereinheit aus Fig. 3;
- Fig. 6: ein zweites Ausführungsbeispiel für ein Lager mit Linearverstellung;
- Fig. 7: das Lager aus Fig. 6 in einem anderen Schnitt;
- Fig. 8: die Anordnung mehrerer Lager eines Druckwerkes;
- Fig. 9: ein nicht beanspruchtes, d.h. zur Erfindung nicht gehörendes Beispiel für ein Lager;
- Fig. 10: eine schematische Darstellung des Beispiels gemäß Fig. 9;
- Fig. 11: eine Ausführung mit doppelter stirnseitiger Lagerung;
- Fig. 12: eine schematische Darstellung der Steuerung mit adaptiver Regelung.

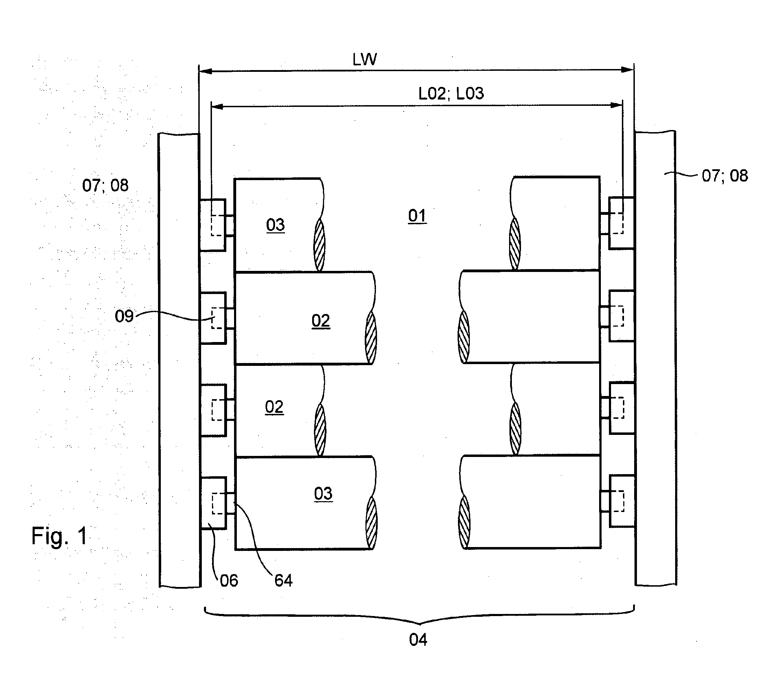

Eine Druckmaschine, z. B. Rollenrotationsdruckmaschine, insbesondere eine Mehrfarbenrollenrotationsdruckmaschine, weist eine Druckeinheit auf, in welcher eine Materialbahn, kurz Bahn ein oder beidseitig bedruckbar ist. Die Druckeinheit weist ein Druckwerk 01 mit wenigstens einem an-/abstellbaren Zylinder 02; 03, hier ein Doppeldruckwerk 01 für den beidseitigen Druck im Gummi-gegen-Gummi-Betrieb, auf (Fig. 1). Das Doppeldruckwerk 01 - in Form von Brücken- oder n-Druckwerken oder auch als ebenes Druckwerk mit in einer gemeinsamen Ebene liegenden Rotationsachsen - wird hier durch zwei Druckwerke 01 gebildet, welche je einen als Übertragungszylinder 02 und einen als Formzylinder 03 ausgebildeten Zylinder 02; 03, z. B. Druckwerkszylinder 02; 03, sowie jeweils ein nicht dargestelltes Farbwerk und im Fall des Nassoffsetdruckes zusätzlich ein Feuchtwerk aufweisen. Jeweils zwischen den beiden Übertragungszylindern 02 wird in Anstelllage eine (Doppel-)Druckstelle gebildet.

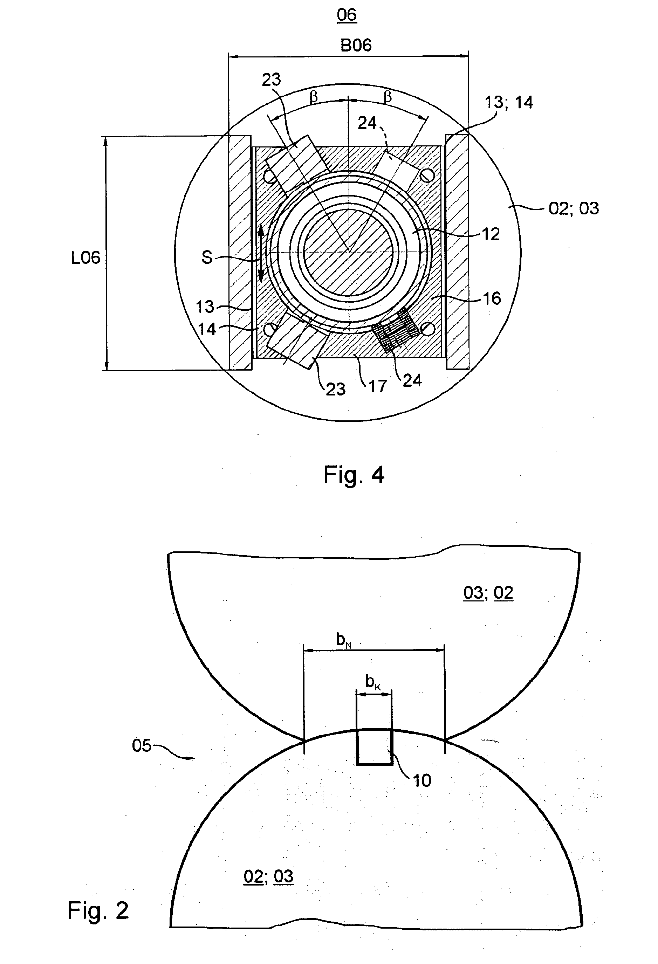

Die Zylinder 02; 03 sind jeweils stirnseitig an bzw. in Seitengestellen 07; 08 drehbar gelagert. Wenigstens einer von zwei eine Nippstelle 05 bildenden Zylindern 02; 03 weist im Bereich seiner Mantelfläche mindestens einen axial verlaufenden Kanal 10 mit einer Breite b_{K} auf. Die aneinander angestellten Zylinder 02; 03 bilden die Nippstelle 05 einer Breite b_{N} aus. Die Überrollung im Betrieb verursacht Kanalschläge, welche wiederum Schwingungen der Zylinder 02; 03 anregen (Fig. 2).

Im Folgenden werden Ausführungsbeispiele für die Lagerung eines Zylinders 02; 03 mittels Lageranordnungen (06; 42: s.u.) gegeben, welche in vorteilhafter Weise ein Entgegenwirken dieser Schwingungen erlauben, indem durch einen oder mehrere Aktoren gezielt eine Kraft im Bereich der Lagerung und/oder Zapfens beaufschlagt wird. Die Lageranordnungen (06; 42: s.u.) können als Lagereinheiten (06; 42: s.u.) welche als Baueinheit sowohl Rotationslager als auch den Aktor/die Aktoren enthalten.

In einer ersten vorteilhaften Ausführung weisen als Zylindereinheiten 04 ausgeführte Module z. B. einen Zylinder 02; 03 mit Zapfen 09 und einer bereits auf dem Zapfen 09 vormontierbaren bzw. vormontierten (vorgespannt und/oder voreingestellten) Lagereinheit 06 auf. Lagereinheit 06 und Zylinder 02; 03 erhalten z. B. bereits vor dem Einsetzen in die Druckeinheit ihre fest definierte Lage zueinander und sind insgesamt in die Druckeinheit einbringbar. Die Lagereinheit 06 kann jedoch auch in üblicher Weise ausgebildet sein, jedoch einen Aktor zum Entgegenwirken von Schwingungen enthalten.

In vorteilhaften Ausführungen ist es vorgesehen, die Zylinder 02; 03 in Lagereinheiten 06 an Seitengestellen 07; 08 rotierbar zu lagern, welche die Flucht der Seitengestelle 07; 08 nicht durchdringen und/oder die Zylinder 02; 03 mit ihrem Ballen einschließlich ihrer Zapfen 09 eine Länge L02; L03 aufweisen, welche kleiner oder gleich einer lichten Weite LW zwischen den die Druckwerkszylinder 02; 03 zu beiden Stirnseiten tragenden Seitengestellen 07; 08 ist. Bei den die Druckwerkszylinder 02; 03 zu beiden Stirnseiten tragenden Seitengestellen 07; 08 handelt es sich vorzugsweise nicht um seitlich derart offene Seitengestelle, sodass die Zylinder 02; 03 axial entnehmbar wären, sondern um Seitengestelle 07; 08 welche in axialer Richtung eine zumindest teilweise Überdeckung mit der Stirnseite der montierten Zylinder 02; 03 aufweisen, d. h. der Zylinder 02; 03, insbesondere dessen Lager (s. u.), ist stirnseitig durch die beiden Seitengestelle 07; 08 zumindest teilweise eingefasst. Grundsätzlich kann aber auch ein lösbarer Einsatz im Seitengestell 07; 08 vorgesehen sein, welcher die Lagereinheiten 06 (42) trägt (Fig. 1).

Vorzugsweise weisen alle vier Druckwerkszylinder 02; 03 (mindestens jedoch drei) je Stirnseite eine eigene Lagereinheit 06 auf, in welcher der An-/Abstellmechanismus bzw. zumindest ein die Relativbewegung zwischen gestellfestem und beweglichem Lagerteil bewerkstellendes Getriebe 11 bereits integriert ist. Es können auch für zwei von drei oder drei der vier Zylinder 02; 03 den An-/Abstellmechanismus aufweisende Lagereinheiten 06 und für den dritten bzw. vierten Zylinder 02; 03 Lagereinheiten ohne An-/Abstellmechanismus vorgesehen sein.

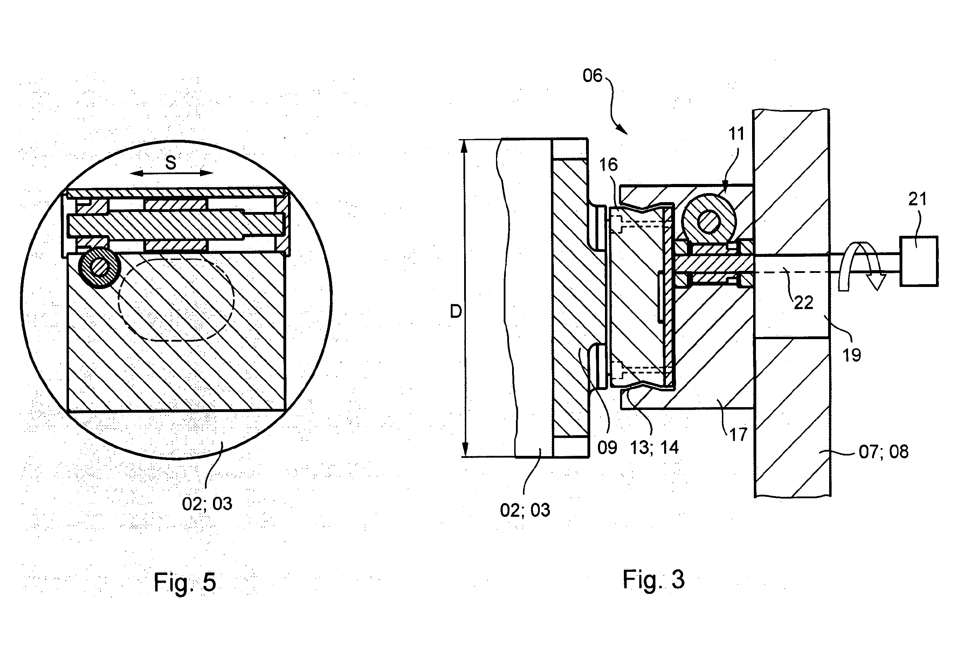

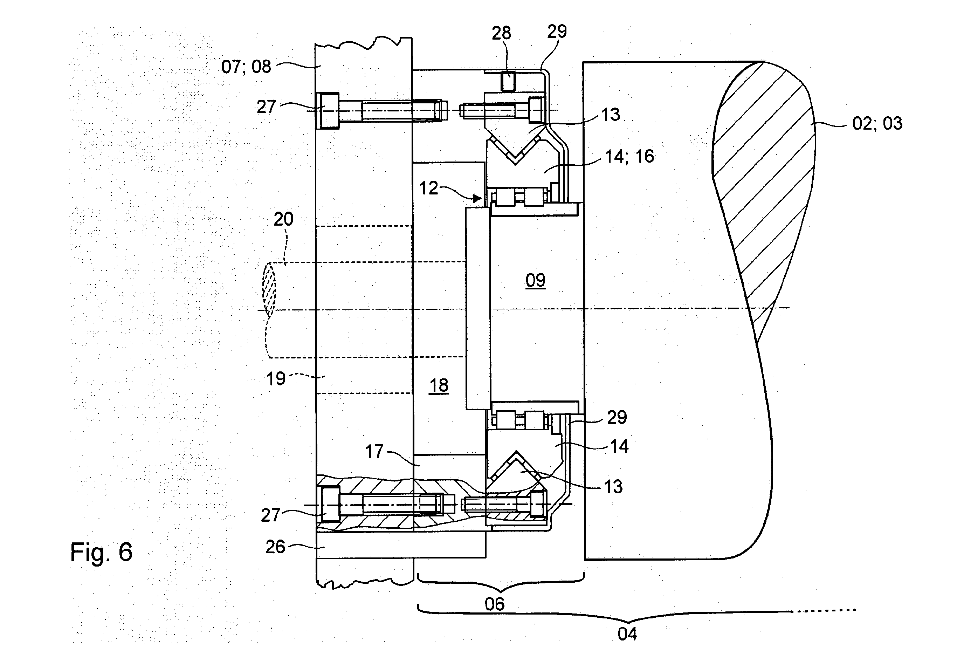

Fig. 3 und 4 zeigen eine bevorzugt auf linearen Stellwegen basierende Lagereinheit 06 im Längs- und Querschnitt. Die den An-/Abstellmechanismus bzw. zumindest das Getriebe 11 integrierende Lagereinheit 06 weist neben einem Radiallager 12, beispielsweise ein Zylinderrollenlager 12, zur rotatorischen Lagerung des Zylinders 02; 03 auch Lagermittel 13; 14 für eine radiale, insbesondere lineare Bewegung des Zylinders 02; 03 - zum Druck-An- bzw. Druck-Abstellen - auf. Hierzu weist die Lagereinheit 06 (nach Montage der Zylindereinheit 04 gestellfeste) trägerfeste Lagerelemente 13 als auch die gegen diese bewegbaren Lagerelemente 14 auf. Die trägerfesten und bewegbaren Lagerelemente 13; 14 sind als zusammenwirkende Linearelemente 13; 14 und gemeinsam mit entsprechenden Gleitflächen oder dazwischenliegenden Wälzelementen insgesamt als Linearlager 13, 14 ausgebildet. Die Linearelemente 13; 14 nehmen z. B. paarweise einen das Radiallager 12 aufnehmenden Lagerblock 16, z. B. Schlitten 16 zwischen sich auf. Lagerblock 16 und die bewegbaren Lagerelemente 14 können auch einteilig ausgeführt sein. Die trägerfesten Lagerelemente 13 sind an einem Träger 17 angeordnet, welcher insgesamt mit dem jeweiligen Seitengestell 07; 08 verbunden wird bzw. ist. Der Träger 17 kann als Grundplatte bzw. Einfassung (kreisförmig, rechteckig oder anderer Grundform) ausgeführt sein, welche beispielsweise zumindest auf einer Antriebsseite eine nicht dargestellte Ausnehmung 18 (entsprechend Fig. 6) für den Durchgriff einer nicht dargestellten Antriebswelle für einen Zapfen 09 eines Zylinders 02; 03 aufweist. Auch das Seitengestell 07; 08 auf der Antriebsseite weist vorzugsweise eine Aussparung 19, insbesondere als Langloch, bzw. einen Durchbruch 19 für eine nicht dargestellte, mit dem Zapfen 09 drehfest zu verbindende Antriebswelle auf. Auf der der Antriebsseite gegenüberliegenden Stirnseite muss weder eine Ausnehmung 18 noch eine Aussparung 19 vorgesehen sein.

Die Ausbildung der Linearlager 13, 14 in der Weise, dass die zusammen wirkenden Lagerelemente 13; 14 beide an der Baueinheit Lagereinheit 06 - und nicht ein Teil am Seitengestell 07; 08 der Druckeinheit - vorgesehen sind, ermöglicht eine Vormontage und Vorjustierung bzw. Einstellung der Lagerspannung. Die vorteilhafte Anordnung der beiden den Lagerblock 16 umgreifenden Linearlager 13, 14 ermöglicht ein spielfreies Einstellen, da sich die beiden Linearlager 13, 14 in der Weise gegenüberliegen, dass die Lagervorspannung und die Lagerkräfte eine wesentliche Komponente in einer Richtung senkrecht zur Rotationsachse des Zylinders 02; 03 erfahren bzw. aufnehmen. Die beiden Linearlager 13, 14 (jeweils mit Lagerelementen 13 und 14) sind bzgl. ihrer Stellrichtung S parallel ausgebildet wobei sie sich bzgl. einer Ebene senkrecht zur Rotationsachse des Zylinders 02; 03 betrachtet beabstandet voneinander befinden und vorzugsweise den Lagerblock 16 zwischen sich aufnehmen. Die Linearlager 13, 14 sind somit in derjenigen Richtung einstellbar, auf welche es beim spielfreien Stellen der Zylinder 02; 03 auch ankommt. Die gestellfesten Lagerelemente 13 sind im Wesentlichen parallel zueinander angeordnet und definieren eine Stellrichtung S.

Da der Zylinder 02; 03 samt Zapfen 09 und Lagereinheit 06 das Seitengestell 07; 08 nicht durchdringen, sind diese bereits vormontiert und die Lager (Radiallager 12 als auch Linearlager 13, 14) voreingestellt bzw. korrekt vorgespannt als Modul Zylindereinheit 06 in die Druckeinheit einsetzbar. Unter dem "Nicht-Durchdringen" und der obigen Definition in Bezug auf die lichte Weite LW soll vorteilhaft im weiteren Sinne verstanden werden, dass zumindest im Bereich der vorgesehenen Endlage der Zylinder 02; 03 und zumindest auf einem durchgängigen Weg von einer Seitengestellkante bis zum Ort der Endlage ein derartiges "Nicht-Durchdringen" vorliegt, so dass die Zylindereinheit 04 von einer offenen, zwischen den beiden stirnseitigen Seitengestellen 07; 08 liegenden Seite her ohne Verkippen, d. h. in einer Lage mit zur Seitengestellebene senkrechten Rotationsachse an die Endlage herangeführt und dort zwischen den beiden Seitengestellinnenwänden angeordnet werden, insbesondere an den Seitengestellinnenwänden befestigt werden, kann. Dies ist z. B. auch dann möglich, wenn auf der Innenseite zwar Angussteile oder andere Erhebungen vorgesehen sind, ein genannter durchgängiger Montageweg jedoch vorgesehen ist.

Zur korrekten Platzierung können nicht dargestellte Montagehilfen, z. B. Passstifte im Seitengestell 07; 08 vorgesehen sein, an welchen die Lagereinheit 06 der vollständig montierten Zylindereinheit 04 ausgerichtet wird, bevor sie durch lösbare Haltemittel, z. B. Schrauben, oder gar stoffschlüssig durch Schweißen mit dem Seitengestell 07; 08 verbunden werden. Für die bereits vor dem Einsetzten in die Druckeinheit vorzunehmende und/oder nach dem Einsetzten nachzujustierende Einstellung der Lagervorspannung in den Linearlagern 13, 14 können entsprechende nicht dargestellte Mittel, z. B. Spannschrauben vorgesehen sein. Vorzugsweise ist die Lagereinheit 06 - zumindest zur Zylinderseite hin - durch eine nicht dargestellte Abdeckung weitgehend gegen Verschmutzung geschützt bzw. gar gekapselt als Baueinheit ausgeführt.

Vorzugsweise für eine module Bauweise sind die Lagereinheiten 06 für Form- und Übertragungszylinder 03; 02 - ggf. bis auf die erlaubte betriebsmäßige Größe des Stellweges - baugleich ausgeführt. Durch die vormontierbare Ausführung können die wirksame Innenfläche des Radiallagers 12 und die äußere wirksame Mantelfläche des Zapfens 09 zylindrisch anstelle von konisch ausgeführt sein, da sowohl die Montage der Lagereinheit 06 auf dem Zapfen 09 als auch die Einstellung des Lagerspiels noch außerhalb der Druckeinheit erfolgen kann. Vorzugsweise ist ein zylindrischer Wellensitz zwischen Zapfen 09 und Radiallager 12 vorgesehen. Die Lagereinheit 06 bzw. das Radiallager 12 kann beispielsweise aufgeschrumpft werden und die Montage der vormontierten Zylindereinheit 04 komplett mit Lagerung in das Seitengestell 07; 08 erfolgen. Die Lagervorspannung wird hierbei durch die Passung von Wellensitz-Wälzlagerinnenring erreicht, und muss nicht während der Montage des Zylinders 02; 03 in der Druckeinheit eingestellt werden (Zeitersparnis in der Montage).

Die Lagereinheit 06, insbesondere Linearlagereinheit 06, weist somit den als beweglichen Teil linear beweglichen Schlitten 16 (Führungsschlitten) auf, welcher der das Radiallager 12 und evtl. ein Axiallager (z. B. zur Seitenregisterverstellung des Zylinders 03) aufnimmt, und einen Freiheitsgrad senkrecht zur Zylinderachse besitzt. Der feststehende Teil (Träger 17 mit Lagerelementen 13) der Lagereinheit 06 wird an der Seitengestellinnenseite des Seitengestells 07; 08 befestigt, z. B. angeschraubt.

In diesem feststehenden Teil der Lagereinheit 06 ist ein - insbesondere spielfreies bzw. vorgespanntes - Getriebe 11 integriert, welches eine von außerhalb der Lagereinheit 06 auf ein Glied des Getriebes 11 eingebrachte Stellbewegung in eine lineare Bewegung des Schlittens 16 umformt. Vorzugsweise, wie in Fig. 3 angedeutet, ist ein derart ausgebildetes Getriebe 11 integriert, welches die Drehbewegung eines lediglich schematisch angedeuteten Verstellantriebes 21 (Stellmittel 21) über beispielsweise eine Welle 22 in eine lineare Bewegung des Schlittens 16 senkrecht zur Welle 22 bzw. Achse des Verstellantriebes 21 und/oder senkrecht zur Zylinderachse umwandelt. Dieses Getriebe 11 kann beispielsweise ein durch die Welle 22 angetriebenes rotierendes Zahnrad beinhalten, welches mit einer dem beweglichen Teil zugeordneten Zahnstange zusammenwirkt. Es kann jedoch auch in anderer Weise ausgeführt sein. Der Verstellantrieb 21 ist vorzugsweise als rotatorischer Antrieb (manuell oder bevorzugt als Elektromotor, insbesondere fernbetätigbar) ausgeführt. Vorteilhaft ist dieser auf der Rückseite der Lagereinheit 06, insbesondere auf der der Lagereinheit 06 abgewandten Seite des Seitengestells 07; 08 (Anschraubfläche zum Seitengestell) angeordnet, z. B. angeflanscht. Die Rotationsachse des Verstellantriebes 21 verläuft vorzugsweise im Wesentlichen parallel, jedoch versetzt zur Zylinderachse.

Alternativ zur o. g. Zahnstangenlösung ist folgende Variante vorteilhafter: Rotatorischer Stellantrieb 21 (idealerweise Schrittmotor 21 zur Synchronisierung zwischen den beiden stirnseitigen Seitengestellen 07; 08, Anpassgetriebe (idealerweise als aufgesetztes Planetengetriebe vor dem Stellantrieb 21), Winkelgetriebe (selbsthemmendes Schneckengetriebe wie dargestellt in Fig. 3 und 5, da Achsen Antriebsmotor und linearer Stellweg orthogonal), Umsetzgetriebe rotatorisch - linear (vorgespannter und damit spielfreier Kugelgewindetrieb wie dargestellt in Fig. 3 und 5).

Der Bauraum sollte im Querschnitt vorzugsweise kleiner oder höchstens gleich der Querschnittsflache des Zylinders 02; 03 (Schmitzringdurchmesser) sein:
- Kantenmaß (Länge L06 der Lagereinheit 06 x Breite B06 der Lagereinheit 06, Querschnitt zu Zylinderstirnfläche) < Durchmesser D des Zylinders- oder Schmitzrings, vorzugsweise Eckenmaß e < D
- L06 oder B06 < 300 mm, vorzugsweise e < 300 mm, in einer günstigen Ausführung L06, B06 < 200 mm, in einer besonders vorteilhaften Ausführung L06 und B06 jeweils kleiner 150 mm.

Vorteilhaft wird eine Kraftmessung, insbesondere für die Radialkraft in Verstellrichtung, im Rahmen der Lagerung bzw. dem Antrieb integriert, indem beispielsweise die Stromaufnahme des Stellmittels 21, z. B. des Motors 21 oder ein Moment im Getriebe, z. B. das Torsionsmoment der Spindel etc., ermittelt und ausgewertet wird.

In einer Druckeinheit mit wenigstens drei als Druckwerk 01 zusammen wirkenden Zylindern 02; 03 (beispielsweise mit Gegendruckzylinder) sind zumindest zwei der drei Zylinder 02; 03 in derartigen Linearlagern 13, 14 jeweils entlang einer Stellrichtung S bewegbar gelagert, welche mit einer die Rotationsachsen des zu stellenden und des in Anstellrichtung folgenden Zylinders 02; 03 gebildete Verbindungsebene maximal einen Winkel von 15° einschließt. Der bewegbare Zylinder 02; 03 ist dann jeweils in lediglich diesem Zylinder 02; 03 zugeordneten, oben beschriebenen Lagereinheiten 06 gelagert.

Wie bereits erwähnt, sind die linear bewegbaren Zylinder 02; 03 vorzugsweise mit jeweils stirnseitigen Lagereinheiten 06 als Zylindereinheit 04 vormontiert bzw. vormontierbar. Hierzu weisen diese Zylinder 02; 03 als Baueinheit mit Ballen und zwei stirnseitigen Zapfen 09, z. B. eine o. g. maximale Länge L02; L03 auf.

In einem als Doppeldruckwerk 01 ausgebildeten Druckwerk 01 sind vorzugsweise zumindest die beiden Formzylinder 03 und mindestens einer der beiden Übertragungszylinder 02 derart linear bewegbar gelagert. Der zweite Übertragungszylinder 02 kann betriebsmäßig gestellfest, insbesondere jedoch in seiner Lage justierbar, gelagert sein. Es können in einer Variante jedoch auch alle vier Zylinder 02; 03 derart linear bewegbar gelagert sein.

In einem dreizylindrigen Druckwerk 01 für den einseitigen Druck sind zumindest zwei, insbesondere zumindest die beiden farbführenden, Zylinder 03; 02, z. B. Form- und Übertragungszylinder 03; 02, in einer Variante jedoch alle drei Zylinder 03; 02 derart linear bewegbar gelagert.

Zur o. g. aktiven Schwingungsdämpfung im Bereich der Lagerung weist - wie in Fig. 4 angedeutet - das Lager 06 mindestens einen Aktor 23, z. B. Piezoaktor 23 auf, mittels welcher eine Krafteinleitung im Lageraufstandspunkt ermöglicht wird. Besonders vorteilhaft ist die Integration der Aktoren 23 in oben genannte Linearlagereinheit 06. Vorteilhaft sind, um die Schwingungen zu detektieren, hierbei zwei Kraftaufnehmer unter einem Winkel ungleich Null, vorzugsweise um 90° oder um 120°, bezüglich einer Umfangsrichtung voneinander beabstandet, vorgesehen. Ist lediglich ein Aktor 23 je Lagereinheit 06 vorgesehen, so kann auch lediglich ein Sensor vorgesehen sein. Eine mögliche Ausführungsform stellen piezoelektrische Sensoren dar, in vorteilhafter Version gleichzeitig als Aktor 23 nutzbar.

In allgemeiner Ausbildung des Druckwerkes 01 sind, um resultierende Kraftrichtungen in jeder Richtung der Blattebene von Fig. 4 zu ermöglichen, zwei Aktoren 23 und wenigstens ein Federelement 24, hier als Tellerfederpaket ausgeführt, erforderlich. Das Federelement 24 ist vorzugsweise den Aktoren 23 im Wesentlichen gegenüberliegend angeordnet. Aus Bauraumgründen sind hier zwei Federelemente 24 für die Rückstellung als Widerlager zu den Aktoren 23 vorgesehen. Die Aktoren 23 weisen beispielsweise in Wirkrichtung (radialer Richtung zum Zapfen 09 hin) betrachtet eine Länge von z. B. zumindest 10 mm, vorteilhaft zumindest 15 mm, insbesondere mindestens 20 mm, auf. Damit ein(e) ausreichend große(s) Moment/Kraft aufbringbar ist, weist der Aktor 23 z. B. eine Querschnittsfläche senkrecht zur Wirkrichtung von z. B. mindestens 50 mm², insbesondere mindestens 60 mm² auf. Der Piezoaktor 23 weist bevorzugt eine Steifigkeit von z. B. mindestens 400.000 N/mm, vorzugsweise mindestens 500.000 N/mm, z. B. ca. 600.000 N/mm auf. Das Federelement 24 weist z. B. eine Steifigkeit von mindestens 2.500 N/mm, insbesondere mindestens 3.000 N/mm auf. Die beiden Aktoren 23 sind z. B. jeweils um einen Winkel β, z. B. größer 20°, insbesondere zwischen 20° und 45°, z.B. ca. 30° ° gegen die durch die Stellrichtung S definierte Gerade geneigt.

In vorteilhafter Ausführung des Druckwerks 01, wobei die Rotationsachsen der Druckwerkszylinder 02; 03 in einer gemeinsamen Ebene E liegen, ist grundsätzlich auch lediglich ein Aktor 23 in der Lagereinheit 06 ausreichend. Dieser muss jedoch entsprechend leistungsstark ausgebildet sein. Die Wirkrichtung dieses einen Aktors 23 verläuft dann vorzugsweise im Wesentlichen in dieser gemeinsamen Ebene E und senkrecht zur Rotationsachse.

In der ersten Ausführung sind somit für die An-/Abstellbewegung einerseits (als Verstellantrieb 21 ausgebildeter Aktor 21) und für die Schwingungskompensation (Aktor 23) andererseits verschiedene Aktoren 21; 23 vorgesehen.

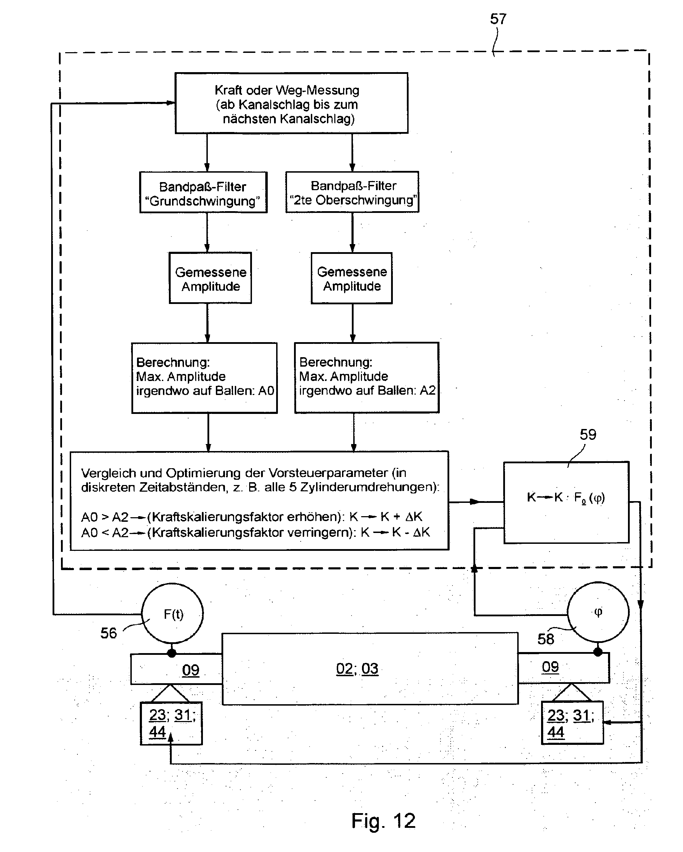

Die Aktoren 23 stehen zur Ansteuerung mit einer Regel- und/oder Steuereinrichtung 57, z. B. einer schematisch in Fig. 12 strichliert dargestellten adaptiven Steuerung 57, in Signalverbindung.

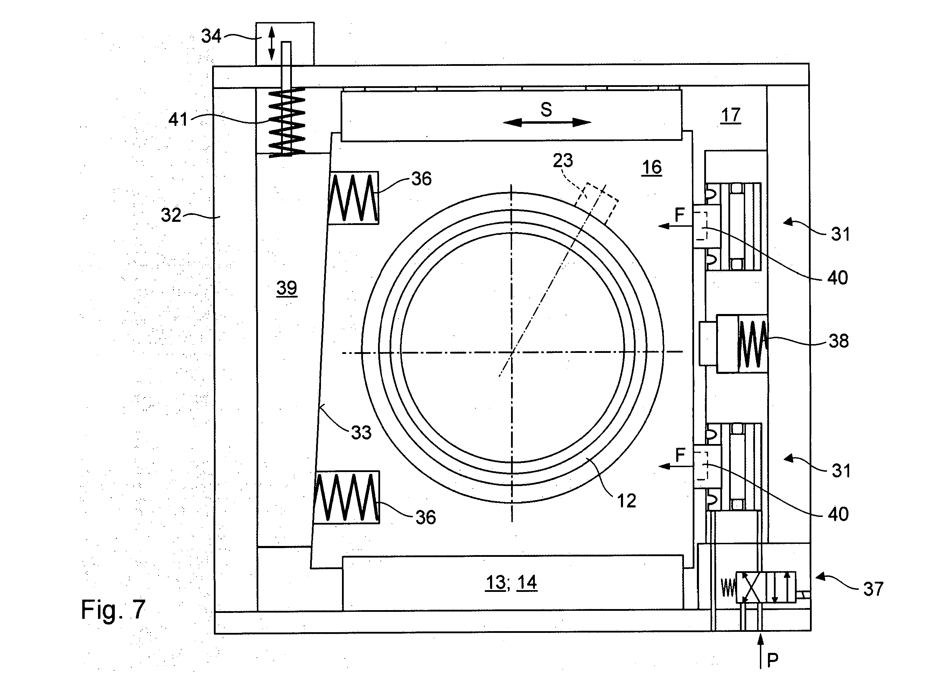

Fig. 6 und 7 zeigen eine zweite vorteilhafte, auf linearen Stellwegen basierende Lagereinheit 06 im Längs- und Querschnitt. Die den An-/Abstellmechanismus integrierende Lagereinheit 06 weist neben einem Radiallager 12, beispielsweise ein Zylinderrollenlager 12, zur rotatorischen Lagerung des Zylinders 02; 03 Lagermittel 13, 14 für eine radiale Bewegung des Zylinders 02; 03 - zum Druck-An- bzw. Druck-Abstellen - auf. Hierzu weist die Lagereinheit 06 (nach Montage der Lagereinheit 06 gestellfeste) trägerfeste Lagerelemente 13 als auch die gegen diese bewegbaren Lagerelemente 14 auf. Die trägerfesten und bewegbaren Lagerelemente 13; 14 sind als zusammenwirkende Linearelemente 13; 14 und gemeinsam mit entsprechenden Gleitflächen oder dazwischenliegenden Wälzelementen insgesamt als Linearlager 13, 14 ausgebildet. Die Linearelemente 13; 14 nehmen paarweise einen das Radiallager 12 aufnehmenden Lagerblock 16, z. B. Schlitten 16 zwischen sich auf. Lagerblock 16 und die bewegbaren Lagerelemente 14 können auch einteilig ausgeführt sein. Die trägerfesten Lagerelemente 13 sind an einem Träger 17 angeordnet, welcher insgesamt mit dem Seitengestell 07; 08 verbunden wird bzw. ist. Der Träger 17 ist beispielsweise als Trägerplatte 17 ausgeführt, welche beispielsweise zumindest auf einer Antriebsseite eine Ausnehmung 18 für den Durchgriff einer strichliert dargestellten Antriebswelle 20 eines in Fig. 7 nicht dargestellten Zapfen 09 der Zylinder 02; 03 aufweist. Auch das Seitengestell 07; 08 auf der Antriebsseite weist vorzugsweise eine Aussparung 19 bzw. einen Durchbruch 19 für eine Antriebswelle 20 auf. Auf der der Antriebsseite gegenüberliegenden Stirnseite muss weder eine Ausnehmung 18 noch eine Aussparung 19 vorgesehen sein (Fig. 6).

Die Ausbildung der Linearlager 13, 14 in der Weise, dass die zusammen wirkenden Lagerelemente 13; 14 beide an der Baueinheit Lagereinheit 06 - und nicht ein Teil am Seitengestell 07; 08 des Druckwerks 01 - vorgesehen sind, ermöglicht eine Vormontage und Vorjustierung bzw. Einstellung der Lagerspannung. Die vorteilhafte Anordnung der beiden den Lagerblock 16 umgreifenden Linearlager 13, 14 ermöglicht ein spielfreies Einstellen, da sich die beiden Linearlager 13, 14 in der Weise gegenüberliegen, dass die Lagervorspannung und die Lagerkräfte eine wesentliche Komponente in einer Richtung senkrecht zur Rotationsachse des Zylinders 02; 03 erfahren bzw. aufnehmen. Die Lager sind somit in derjenigen Richtung einstellbar, auf welche es beim spielfreien Stellen der Zylinder 02; 03 auch ankommt.

Da der Zylinder 02; 03 samt Zapfen 09 und Lagereinheit 06 das Seitengestell 07; 08 nicht durchdringen, sind diese bereits vormontiert und die Lager (Radiallager 12 als auch Linearlager 13, 14) voreingestellt bzw. korrekt vorgespannt als Modul Zylindereinheit 04 in die Druckeinheit einsetzbar. Unter dem "Nicht-Durchdringen" und der obigen Definition in Bezug auf die lichte Weite soll vorteilhaft im weiteren Sinne verstanden werden, dass zumindest im Bereich der vorgesehenen Endlage der Zylinder 02; 03 und zumindest auf einem durchgängigen Weg von einer Seitengestellkante bis zum Ort der Endlage ein derartiges "Nicht-Durchdringen" vorliegt, so dass die Zylindereinheit 04 von einer offenen, zwischen den beiden stirnseitigen Seitengestellen 07; 08 liegenden Seite her ohne Verkippen, d. h. in einer Lage mit zur Seitengestellebene senkrechten Rotationsachse an die Endlage herangeführt und dort zwischen den beiden Seitengestellinnenwänden angeordnet werden, insbesondere an den Seitengestellinnenwänden befestigt werden, kann. Dies ist z. B. auch dann möglich, wenn auf der Innenseite zwar Angussteile oder andere Erhebungen vorgesehen sind, ein genannter durchgängiger Montageweg jedoch vorgesehen ist.

Die Lagereinheiten 06 sind in der Weise an den Innenwänden der Seitengestelle 07; 08 angeordnet, dass die Zylinder 02; 03, insbesondere deren Lagereinheiten 06 auf der den Zylinder 02; 03 zugewandten Seite durch das Seitengestell 07; 08 gestützt sind, was statische und Montagevorteile birgt.

Zur korrekten Platzierung können Montagehilfen 26, z. B. Passstifte 26 im Seitengestell 07; 08 vorgesehen sein, an welchen die Lagereinheit 06 der vollständig montierten Zylindereinheit 04 ausgerichtet wird, bevor sie durch lösbare Haltemittel 27, z. B. Schrauben 27, oder gar stoffschlüssig durch Schweißen mit dem Seitengestell 07; 08 verbunden werden. Für die bereits vor dem Einsetzten in die Druckeinheit vorzunehmende und/oder nach dem Einsetzten nachzujustierende Einstellung der Lagervorspannung in den Linearlagern 13, 14 können entsprechende Mittel 28, z. B. Spannschrauben 28 vorgesehen sein (Fig. 6). Vorzugsweise ist die Lagereinheit 06 - zumindest zur Zylinderseite hin - durch eine Abdeckung 29 weitgehend gegen Verschmutzung geschützt bzw. gar gekapselt als Baueinheit ausgeführt.

In Fig. 6 ist schematisch der Zylinder 02; 03 mit Zapfen 09 und einer vormontierten Lagereinheit 06 gekennzeichnet. Diese Baugruppe kann somit vormontiert zwischen die Seitengestelle 07; 08 der Druckeinheit montagefreundlich eingesetzt und an hierzu vorgesehenen Stellen befestigt werden. Vorzugsweise für eine module Bauweise sind die Lagereinheiten 06 für Form- und Übertragungszylinder 03; 02- ggf. bis auf die erlaubte betriebsmäßige Größe des Stellweges - baugleich ausgeführt. Durch die vormontierbare Ausführung können die wirksame Innenfläche des Radiallagers 12 und die äußere wirksame Mantelfläche des Zapfens 09 zylindrisch anstelle von konisch ausgeführt sein, da sowohl die Montage der Lagereinheit 06 auf dem Zapfen 09 als auch die Einstellung des Lagerspiels außerhalb der Druckeinheit erfolgen kann. Die Lagereinheit 06 kann beispielsweise aufgeschrumpft werden.

Die gestellfesten Lagerelemente 13 sind im Wesentlichen parallel zueinander angeordnet und definieren eine Stellrichtung S (Fig. 7).

Ein Druck-An-Stellen erfolgt durch Bewegen des Lagerblocks 16 in Richtung Druckstelle mittels einer durch wenigstens einen Aktor 31 auf den Lagerblock 16 aufgebrachten Kraft F, insbesondere durch einen kraftgesteuerten bzw. über eine Kraft definierten Aktor 31, mittels welchem zur Anstellung eine definierte bzw. definierbare Kraft F in Druck-An-Richtung auf den Lagerblock 16 bringbar ist (Fig. 7). Die für die Farbübertragung und damit die Druckqualität u.a. entscheidende Linienkraft in den Nippstellen 05 ist daher nicht durch einen Stellweg, sondern durch das Kräftegleichgewicht zwischen der Kraft F und der zwischen den Zylindern 02; 03 resultierenden Linienkraft F_{L} und das resultierende Gleichgewicht definiert. In einer ersten, nicht eigens dargestellten Ausführung werden Zylinder 02; 03 paarweise aneinander angestellt, indem der Lagerblock 16 mit der entsprechend eingestellten Kraft F über den/die Aktor(en) 31 beaufschlagt wird. Sind mehrere (z. B. drei oder vier) einander in direkter Folge benachbarte jeweils paarweise zusammenwirkende Zylinder 02; 03 ohne eine Möglichkeit zur Fixierung oder Begrenzung des Stellweges mit einem rein kraftabhängigen Stellmechanismus ausgeführt, so lässt sich zwar ein bereits bzgl. der erforderlichen Drücke (Linienkräfte) eingestelltes System ab- und nachfolgend wieder korrekt anstellen, eine Grundeinstellung vorzunehmen ist aufgrund der sich z. T. überlagernden Reaktionen nur schwer möglich.

Zur Grundeinstellung eines Systems (mit entsprechenden Aufzügen etc.) ist es daher in einer vorteilhaften Ausführung vorgesehen, dass wenigstens die beiden mittleren der vier Zylinder 02 - oder anders ausgedrückt, zumindest sämtliche von den beiden äußeren Zylindern 03 verschiedenen Zylinder 02 wenigstens während eines Zeitraumes beim Einstellen in einer definierten Lage, vorteilhaft in der durch das Kräftegleichgewicht gefundenen Anstelllage, fixierbar bzw. zumindest wegbegrenzbar ist.

Besonders vorteilhaft ist eine Ausführung, wobei der Lagerblock 16 - auch während des Betriebes - zumindest in eine Richtung von der Druckstelle weg gegen eine Kraft, z. B. Federkraft, insbesondere eine definierbare Kraft, bewegbar gelagert ist. Damit wird - im Gegensatz zur reinen Wegbegrenzung - einerseits eine maximale Linienkraft beim Zusammenwirken der Zylinder 02; 03 definiert, und andererseits ein Nachgeben, beispielsweise bei einem Bahnriss mit anschließendem Wickler am Zylinder 02; 03, ermöglicht.

Zu einer der Druckstelle zugewandten Seite weist die Lagereinheit 06 - zumindest während des Einstellvorgangs - einen ortsveränderbaren Anschlag 39 auf, welcher den Stellweg entlang der Stellrichtung S zur Druckstelle hin begrenzt. Der Anschlag 39 ist in der Weise ortsveränderbar, dass die als Anschlag wirksame Anschlagfläche 33 entlang der Stellrichtung S zumindest in einem Bereich variierbar ist. Es ist somit in vorteilhafter Ausführung eine Justiervorrichtung (verstellbarer Anschlag) vorgesehen, mittels welcher die Position einer druckstellennahen Endlage des Lagerblockes 16 einstellbar ist. Zur Wegbegrenzung/Justage dient z. B. ein unten beschriebener Keilantrieb. Das Stellen des Anschlages 39 kann grundsätzlich manuell oder über ein als Aktor (34, s. u.) ausgeführtes Stellmittel 34 erfolgen. Weiter ist in vorteilhafter Ausführung ein in Fig. 6 und 7 nicht dargestelltes Halte- oder Klemmmittel vorgesehen, mittels welchem sich der Anschlag 39 in der gewünschten Lage festlegen lässt. Weiter ist mindestens ein federnd wirkendes Element 36, z. B. Federelement 36, vorgesehen, welches auf den Lagerblock 16 eine Kraft F_{R} vom Anschlag 39 in eine Richtung von der Druckstelle weg aufbringt. D. h. das Federelement 36 bewirkt ein Druck-Ab-Stellen für den Fall, dass der Lagerblock 16 nicht in anderer Weise an der Bewegung gehindert wird. Ein Druck-An-Stellen erfolgt durch Bewegen des Lagerblocks 16 in Richtung Anschlag 39 durch wenigstens einen Aktor 31, insbesondere einen kraftgesteuerten Aktor 31, mittels welchem zur Anstellung wahlweise eine definierte bzw. definierbare Kraft F in Druck-An-Richtung auf den Lagerblock 16 bringbar ist. Ist diese Kraft F größer als die Rückstellkraft F_{R} der Federelemente 36, so erfolgt bei entsprechender räumlicher Ausbildung ein Anstellen des Zylinders 02; 03 an den benachbarten Zylinder 02; 03 und/oder ein Anstellen des Lagerblocks 16 an den Anschlag 39.

Im Idealfall sind die aufgebrachte Kraft F, die Rückstellkraft F_{R} und die Position des Anschlages 39 derart gewählt, dass zwischen Anschlag 39 und der Anschlagfläche 33 des Lagerblockes 16 in Anstelllage keine wesentliche Kraft ΔF übertragen wird, dass beispielsweise gilt |ΔF|< 0,1*(F- F_{R}), insbesondere |ΔF|< 0,05*(F- F_{R}), idealerweise |ΔF| ≈ 0. In diesem Fall wird die Anstellkraft zwischen den Zylindern 02; 03 wesentlich über die durch den Aktor 31 anliegende Kraft F bestimmt. Die für die Farbübertragung und damit die Druckqualität u.a. entscheidende Linienkraft in den Nippstellen 05 ist daher nicht primär durch einen Stellweg, sondern bei quasifreiem Anschlag 39 durch die Kraft F und das resultierende Gleichgewicht definiert. Grundsätzlich wäre nach Auffinden der Grundeinstellung mit den hierzu passenden Kräften F ein Entfernen des Anschlages 39 bzw. einer entsprechenden, lediglich während des Grundeinstellens wirksamen Fixierung denkbar.

Der Aktor 31 kann grundsätzlich als beliebiger, eine definierte Kraft F aufbringender Aktor 31 ausgeführt sein. Vorteilhaft ist der Aktor 31 als durch Druckmittel betätigbares Stellmittel 31, insbesondere als durch ein Fluid bewegbarer Kolben 31 ausgeführt. Vorteilhaft im Hinblick auf mögliches Verkanten ist die Anordnung mehrerer, hier zwei, derartiger Aktoren 31. Als Fluid kommt vorzugsweise wegen deren Inkompressibilität eine Flüssigkeit, z. B. Öl oder Wasser, zum Einsatz.

Zu Betätigung der hier als Hydraulikkolben 31 ausgeführten Aktoren 31 ist in der Lagereinheit 06 ein steuerbares Ventil 37 vorgesehen. Dieses ist beispielsweise elektronisch ansteuerbar ausgeführt und stellt den Hydraulikkolben 31 in einer Stellung drucklos oder zumindest auf ein geringeres Druckniveau, während in anderer Stellung der die Kraft F bedingende Druck P anliegt. Zusätzlich ist hier zur Sicherheit eine nicht bezeichnete Leckageleitung vorgesehen.

Um zu große An-/Abstellwege zu vermeiden und dennoch Bahnwickler abzusichern, kann auf der druckstellenfernen Seite des Lagerblocks 16 eine Wegbegrenzung durch einen ortsveränderlichen, kraftbegrenzten Anschlag 38 als Überlastsicherung 38, z. B. Federelement 38, vorgesehen sein, welche im betriebsmäßigen Druck-Ab, d. h. die Kolben 31 sind entlastet und/oder eingefahren, zwar als Anschlag 38 für den Lagerblock 16 in Druck-Ab-Stellung dienen, im Fall eines Bahnwicklers oder anderer überhöhter Kräfte von der Druckstelle her jedoch nachgibt und einen größeren Weg frei gibt. Eine Federkraft dieser Überlastsicherung 38 ist daher größer gewählt, als die Summe der Kräfte aus den Federelementen 36. Beim betriebsmäßigen An-/Abstellen ist daher ein lediglich sehr kurzer Stellweg, z. B. lediglich 1 bis 3 mm, vorsehbar.

Der Anschlag 39 ist in der dargestellten Ausführung (Fig. 7) als quer zur Stellrichtung S bewegbarer Keil 39 ausgeführt, wobei beim Bewegen desselben die Position der jeweils wirksamen Anschlagfläche 33 entlang der Stellrichtung S variiert. Der Keil 39 stützt sich beispielsweise an einem trägerfestem Anschlag 32 ab.

Der hier als Keil 39 ausgeführte Anschlag 39 ist durch einen Aktor 34, beispielsweise ein druckmittelbetätigbares Stellmittel 34 wie einen mit Druckmittel betätigbaren Kolben 34 in einem Arbeitszylinder mit (doppeltwirkenden) Kolben oder einen Elektromotor über eine Gewindespindel, bewegbar. Dieser Aktor 34 kann entweder in beide Richtungen wirksam oder aber, wie hier dargestellt, als Einwegeaktor ausgeführt sein, welcher bei Aktivierung gegen eine Rückstellfeder 41 arbeitet. Die Kraft der Rückstellfeder 41 ist aus o. g. Gründen (weitgehend kraftfreier Anschlag 39) so schwach gewählt, dass der Keil 39 lediglich entgegen Schwerkraft oder Schwingungskräften in seiner korrekten Lage gehalten wird.

Grundsätzlich kann der Anschlag 39 auch auf andere Art (z. B. als zur Stellrichtung S stellbarer und fixierbarer Stößel, etc.) in der Weise ausgeführt sein, dass er eine in Stellrichtung S variierbare, und - zumindest während des Einstellvorgangs - fixierbare Anschlagfläche 33 für die Bewegung des Lagerblockes 16 in Richtung Druckstelle bildet. In nicht dargestellter Ausführung erfolgt ein Stellen des Anschlages 39 beispielsweise direkt parallel zur Stellrichtung S durch ein Antriebsmittel, beispielsweise einen mit Druckmittel betätigbaren Zylinder mit (doppelt wirkendem) Kolben oder einen Elektromotor.

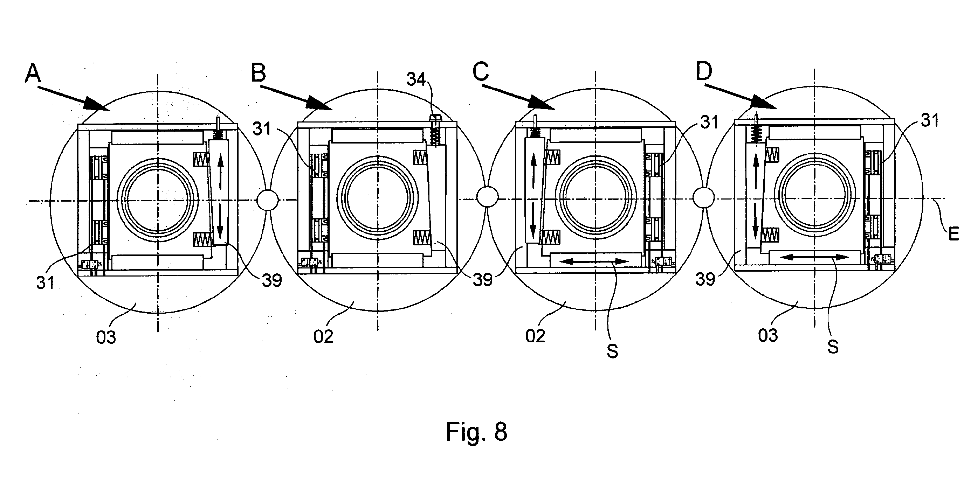

Das als Doppeldruckwerk 01 ausgeführten Druckwerk 01 der Fig. 8 zeigt schematisch je Zylinder 02; 03 eine Lagereinheit 06. In einer vorteilhaften, hier dargestellten Ausführung bilden in Druck-An-Stellung die Rotationszentren der Zylinder 02; 03 eine gedachte Verbindungslinie bzw. -ebene E (im folgenden als "lineares Doppeldruckwerk" bezeichnet). Vorzugsweise schlissen die Ebene E und die ein- bzw. auslaufende Bahn einen von 90° abweichenden Innenwinkel zwischen 19 und 38°, insbesondere von 80 bis 41 ° ein. Die Lagereinheit 06 der Übertragungszylinders 02, insbesondere aller Zylinder 02; 03, sind im montierten Zustand in der in Fig. 8 dargestellten Ausführung am Seitengestell 07; 08 derart angeordnet, dass deren Stellrichtungen S - z. B. aus Gründen einer kraftdefinierten Druck-An-Einstellung - mit der Verbindungsebene E maximal einen Winkel von 15° einschließen, z.B. einen spitzen Winkel von ca. 2° bis 15°, insbesondere 4 bis 10° miteinander bilden (nicht dargestellt). Insbesondere von Vorteil im Hinblick auf die Montage ist diese Anordnung, wenn die Stellrichtung S horizontal und die Bahn im Wesentlichen vertikal verläuft. In einer in Fig. 8 dargestellten Ausführung kann der Stellrichtung S auch parallel zur Ebene E verlaufen. In beiden Varianten entspricht die Richtung der Krafteinleitung durch den Kanalschlag (resultierende Hauptschwingungsebene beim Nippdurchtritt) in Wesentlichen Anteilen auch der Stell- bzw. Kraftrichtung der Aktoren 31. Ein Gegenwirken gegen die Schwingungen durch den Kanalschlag wird bei dieser Ausführung mit den selben Aktoren 31 wie dem An-/Abstellen möglich.

In der dargestellten zweiten Ausführung sind somit für die An-/Abstellbewegung einerseits und für die Schwingungskompensation andererseits selbe Aktoren 31 vorgesehen.

In abgewandelter Ausführung eines winkelig (n- oder u-Druckwerk 01) angeordneten Doppeldruckwerkes 01 soll unter der Ebene E' die Verbindungsebene der die Druckstelle bildenden Zylinder 02 und unter Ebene E" die Verbindungsebene zwischen Form- und Übertragungszylinder 03; 02 verstanden werden, und das oben genannte zum Winkel β auf die Stellrichtung S wenigstens eines der die Druckstelle bildenden Zylindern 02 bzw. den Formzylinder 03 und die Ebene E' bzw. E" bezogen werden.

Einer der die Druckstelle bildenden Zylinder 02 kann auch ortsfest und betriebsmäßig nichtstellbar (ggf. jedoch justierbar) im Seitengestell 07; 08 angeordnet sein, während der andere entlang des Stellrichtung S gelagert ist.

Um die beim Kanalschlag, d. h. beim Nippdurchgang der Fig. 2, entstehenden Schwingungen entgegenzuwirken, kann nun gleichzeitig oder phasenversetzt zum Kanalschlag/Nippdurchgang ein Kraftimpuls unmittelbar oder mittelbar auf den Zapfen 09 bzw. den Lagerblock 16 der Lagereinheit 06 ausgeführt werden.

Dabei sind zwei Vorgehensweisen möglich. In einer ersten Ausgestaltung wird der Zeitpunkt für den Kraftimpuls aus der (bekannten) Winkellage der Zylinder 02; 03 bestimmt. D. h. es wird der zur Dämpfung der Schwingung vorgesehene Aktor (Aktor 31 oder ein zusätzlicher Aktor 40 oder 23 (s.u.)) in Abhängigkeit von der Drehwinkellage des betreffenden Zylinders 02; 03 mit einem entsprechenden Signal oder Stellwert beaufschlagt. In diesem Fall erfolgt bzgl. des Zeitpunktes ein Steuern, wobei die Größe des Signals bzw. der Kraft entweder in Abhängigkeit von Maschinenkennzahlen etc. vorgehalten sein kann oder ggf. adaptiv bestimmt werden kann.

In zweiter Ausgestaltung erfolgt die Beaufschlagung mit dem Signal oder Stellwert in Abhängigkeit von Messsignalen, d. h. in einem echten Regelkreis. Dieses Messsignal kann z. B. aus einer Weg- oder Beschleunigungsmessung an der Lagereinheit 06 (insbesondere am Lagerblock 16 oder Zapfen 09) oder aber als Druckmessung im hydraulischen System zur Druckmittelversorgung der die Druck-An-/Ab-Stellung bewerkstellenden Aktoren 31 sein.

Für die Erzeugung des der Schwingung entgegenwirkenden Kraftimpulses sind zwei Ausgestaltungen möglich. In erster Ausgestaltung erfolgt die Erzeugung dieser Kraftimpulse durch die die Druck-An-/Ab-Stellung bewerkstellenden Aktoren 31 selbst. Hierfür sind im den Aktoren 31 vorgeordneten Hydrauliksystem nicht dargestellten Schnellsteuerventile vorgesehen. Die Aktoren 31 bzw. Schnellsteuerventile stehen für die Modulation des anliegenden Druckes mit einem über den Anstelldruck hinausgehenden höheren Druck zur Beaufschlagung mit dem Signal/Kraftimpuls z. B. wieder mit einer Regel- und/oder Steuereinrichtung 57 in Verbindung.

In einer zweiten Ausgestaltung können zusätzlich zu den die Druck-An-/Ab-Stellung bewerkstellenden Aktoren 31 weitere, insbesondere hochdynamisch wirkende Aktoren 40, z. B. Piezoaktoren 40, vorgesehen sein, welche ebenfalls auf den Lagerblock 16 wirken. Diese können (strichliert in Fig. 7 angedeutet) z. B. in die Stößel der Kolben der Aktoren 31 integriert sein. Im Falle zwei unterschiedlicher Aktoren 31; 40 sind die niederfrequenten Stellbewegungen durch die die Druck-An-/Ab-Stellung bewerkstellenden Aktoren 31 und die den Schwingungen entgegenwirkenden hochfrequenten Bewegungen/Kraftimpulse durch andere Aktoren 40 (oder 23) ausgeführt. Die zusätzlichen Piezoaktoren 40 (oder 23) stehen für die Modulation der Anstellkraft z. B. wieder mit einer Regel- und/oder Steuereinrichtung 57 in Verbindung.

Die im zweiten Ausführungsbeispiel (Fig. 6 bis 8) angegebene Lösung (mit oder ohne zusätzlichem Piezoaktor 40) der Schwingungsdämpfung ist vorteilhaft zur Schwingungsdämpfung einsetzbar, da die Richtung der Druckkräfte zwischen zwei aneinander angestellten Zylindern 02; 03 und die Bewegungsrichtung in der der Lagereinheit 06 in einer Linie liegen. In bislang oft üblichen Ausführungen, wobei die Druck-An Bewegung mittels Exzenterlager ausgeführt ist, erfolgt die Zustellbewegung nicht in der gleichen Richtung wie die Druckkräfte. Bei der Linearlagerung (wie in Fig. 3 bis 5 oder in Fig. 6 bis 8) liegt die Zustellbewegung in der gleichen Richtung wie die Druckkräfte. Dies ermöglicht einen Kraftimpuls, welcher in die gleiche Richtung wie der Störimpuls (Kanalschlag) wirkt und eine Schwingungsdämpfung bewirkt.

In einer vorteilhaften, lediglich in Fig. 7 angedeuteten Variante der zweiten Ausführungsform des zweiten Ausführungsbeispiels (unterschiedliche Antriebe für Stellbewegung Schwingungskompensation) kann der die Aktoren 23 aufweisende Lagerblock 16 aus Fig. 4 (jedoch ohne den Stellantrieb aus den Fig. 3 und 5) in der durch die Aktoren 31 hinsichtlich der Stellbewegung angetriebenen Lageranordnung 06 angeordnet sein. Hierbei entfällt z. B. das Getriebe 11 der Fig. 3 und 5, das An-/Abstellen erfolgt beispielsweise wie in den Fig. 6 bis 8 mittels mindestens eines Aktors 31. Einer von einem oder mehreren im Lagerblock 16 integrierten Aktoren 23 ist in Fig. 7 exemplarisch strichliert angedeutet. Das zur Anordnung der Aktoren 23 zum ersten Beispiel genannte ist genauso wie das zur Lageranordnung 06 (unter Auslassung des Aktors 40) des zweiten Beispiels anzuwenden.

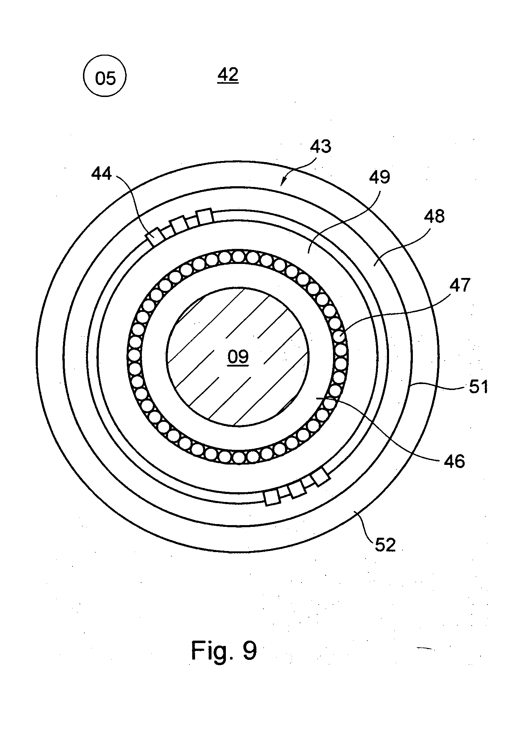

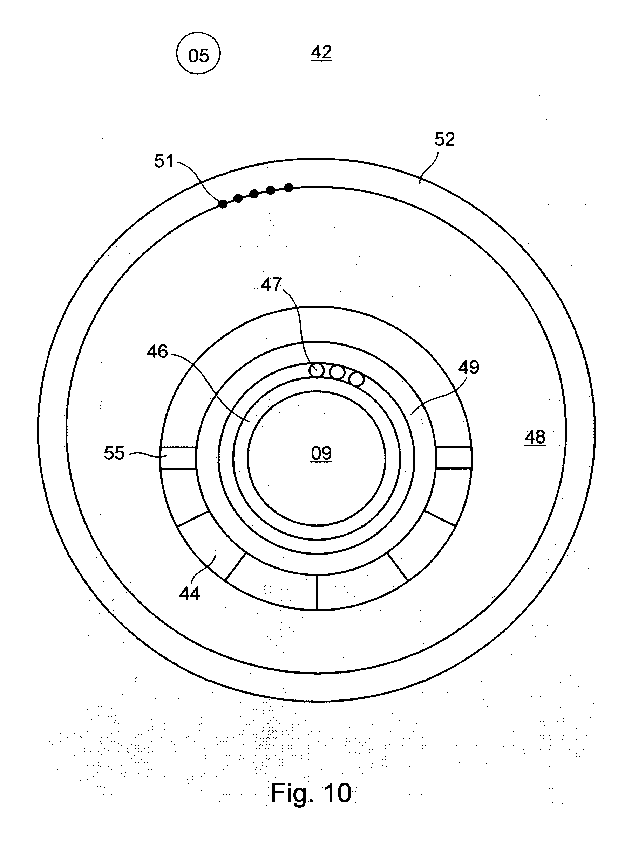

In einer nicht beanspruchten, d.h. zur Erfindung nicht gehörenden Ausführung (Fig. 9 und 10) ist eine Lageranordnung 42 zur Aufnahme der Zapfen 09 der Zylinder 02; 03 als übliches, an oder im Seitengestell 07; 08 angeordnetes Radiallager 42, z. B. als ein Mehrringlager 42 ausgeführt. Zwecks An- und Abstellung kann die Lageranordnung 42 als Exzenterlager ausgeführt sein, wobei durch Verschwenken eines exzentrischen Außenringes die Achse des gelagerten Zylinders 02; 03 in radialer Richtung verlagert wird. Dies erfolgt beispielsweise durch einen nicht dargestellten Antrieb, z. B. Stellantrieb für die An-/Ab-Stellung, wie beispielsweise motorisch oder pneumatisch über entsprechende Getriebe. Die Lageranordnung 42 weist mindestens einen (in Fig. 9 und 10 geteilten) Ring 43, z. B. exzentrischen Zwischenring 43, und mindestens einen Ring 46, z. B. Innenring 46, auf, zwischen welchen Wälzkörper 47 (oder Gleitflächen) eine relative Rotation erlauben. Der geteilte Zwischenring 43 weist z. B. einen radial weiter außen liegenden, z. B. exzentrischen, Ring 48 und einen weiter innen liegenden Ring 49 auf. Der exzentrische Ring 48 ist beispielsweise über ein Radiallager 51, z. B. ein Gleit- oder Nadellager 51, verschwenkbar in einer Außenring 52 gelagert. Im Gefüge der Lagereinheit 42 sind zwischen mindestens zwei benachbarten Ringen 43; 46; 48; 49, 52 (hier den beiden Ringen 48; 49 des geteilten Zwischenrings 43) Aktoren 44 angeordnet, welche in radialer Richtung eine Kraft zwischen den Ringen 43; 46; 48; 49 ausüben und eine damit verbundene (ggf. infinitesimal kleine) Relativbewegung verursachen können. Im Beispiel ist der Zwischenring 43 zweiteilig ausgeführt und beherbergt zwischen den beiden Ringen 48 und 49 mehrere, mindestens jedoch zwei, in Umfangsrichtung voneinander beabstandete Aktoren 44, insbesondere Piezoelemente 44. Diese Aktoren 44 stehen zur gezielten Beaufschlagung mit einer Regel- und/oder Steuereinrichtung 57 in Signalverbindung. Diese beinhaltet z. B. einen Algorithmus, welcher dem Aktor 44 einen Signalverlauf liefert.

Vorzugsweise sind mindestens zwei Aktoren 44 angeordnet, wovon sich z. B. einer im Winkelbereich der hier nur durch das eingekreiste Bezugszeichen 05 angedeuteten Nippstelle 05 (zum nächsten Zylinder 02; 03) sowie der andere diesem gegenüber befindet. Zusätzlich oder statt dessen können jedoch jeweils paarweise gegenüberliegende Gruppen von Aktoren 44 in einem bestimmten Winkelbereich um die Nippstelle 05 herum und gegenüber angeordnet sein. Diese Paare einander gegenüberliegender Aktoren 44 werden dann beispielsweise jeweils entgegengesetzt zueinander beaufschlagt um die Bewegung des Innenrings 46 bzw. des Zapfens 09 zu ermöglichen. Die Anordnung mehrerer in Umfangsrichtung zueinander in Umfangsrichtung zueinander versetzter Paare von Aktoren 44 ermöglicht es, die durch die Nippstelle 05 "durchdrehende" Schwingung auch noch im Bereich abklingender Nachschwingungen durch Kraftimpulse zu beeinflussen, da sich die durch den Kanalschlag angeregte Schwingungsebene mit dem Zylinder 02; 03 (im Gegensatz zum Zwischenring 43) dreht.

Zusätzlich zu mehreren in Umfangsrichtung verteilten Aktoren 44 können auch Aktoren 44 in axialer Richtung des Lagers voneinander beabstandet sein. Hiermit ist je nach Ansteuerung ein Biegemoment auf den Lagerinnenring 46 und damit den Zapfen 09 aufbringbar.

Der zeitliche Verlauf der Ansteuerung der Aktoren 44 kann beispielsweise drehzahlabhängig (siehe auch unten) und ggf. zusätzlich in Abhängigkeit von Parametern wie Temperatur und/oder Anstellkraft der Zylinder 02; 03 und/oder Gummituchverhalten. Die Ansteuerung erfolgt hierbei beispielsweise bzgl. des Zeitpunktes und ggf. der Signalform gesteuert korreliert mit der Winkellage des betreffenden Zylinders 02; 03, das Auffinden der jeweils optimalen bzw. ausreichenden Signalhöhe kann jedoch einem adaptiven Regelprozess unterliegen (siehe unten). Die Ansteuerung der Aktoren 44 kann bzgl. ihrer Übergänge (An bzw. Aus) mit parabolischen, sinuidalen oder anderen Funktionen höherer Ordnung erfolgen.

In Fig. 10 ist schematisch eine Variante zur o.g., nicht beanspruchten Lageranordnung 42 der Fig. 9 dargestellt, wobei z. B. in einem zur Nippstelle 05 weisenden Halbraum zwischen äußerem und innerem Ring 48; 49 liegenden Zwischenraum ein über einen größeren Winkelbereich von z. B. 45° bis maximal 90° reichender Aktuator 44 angeordnet ist. Im der Nippstelle 05 gegenüberliegenden Bereich kann ebenfalls ein derartig ausgedehnter Aktor 44 oder wie angedeutet mehrere Aktoren 44 nebeneinander zwischen dem inneren und äußeren Ring 48; 49 angeordnet sein. Wie angedeutet, sollten in Umfangsrichtung Zwischenräume 55 zwischen den der Seite (Halbraum) der Nippstelle 05 zuzurechnenden und der gegenüberliegenden Seite zuzurechnenden Aktoren 44 vorgesehen sein, damit der innere Ring 49 in Richtung Nippstelle 05 in gewissen Grenzen bewegbar bleibt. Die der Nippstelle 05 zuzurechnenden und der gegenüberliegenden Seite zuzurechnenden Aktoren 44 werden wie oben genannt wieder in umgekehrter angesteuert.

Bei sehr schlanken Zylindern tritt neben dem Problem des Kanalschlags auch noch das Problem der statischen Zylinderbiegung aufgrund der Druckspannung auf. Hierdurch ist in Ballenmitte die Drucktucheindrückung reduziert, was zu Farbübertragungsproblemen führen kann. Andererseits kann es bei Verzahnung zweier Zylinderstirnräder zu einem Drehmoment kommen, wenn die Zylinder 02; 03 aufeinander zu bewegt werden und eine tangentiale Bewegungskomponente existiert. Letzteres kann beispielsweise der Fall sein, wenn die Zylinder 02; 03 des Druckwerkes 01 nicht linear, sondern n-, u- oder z-förmig angeordnet sind.

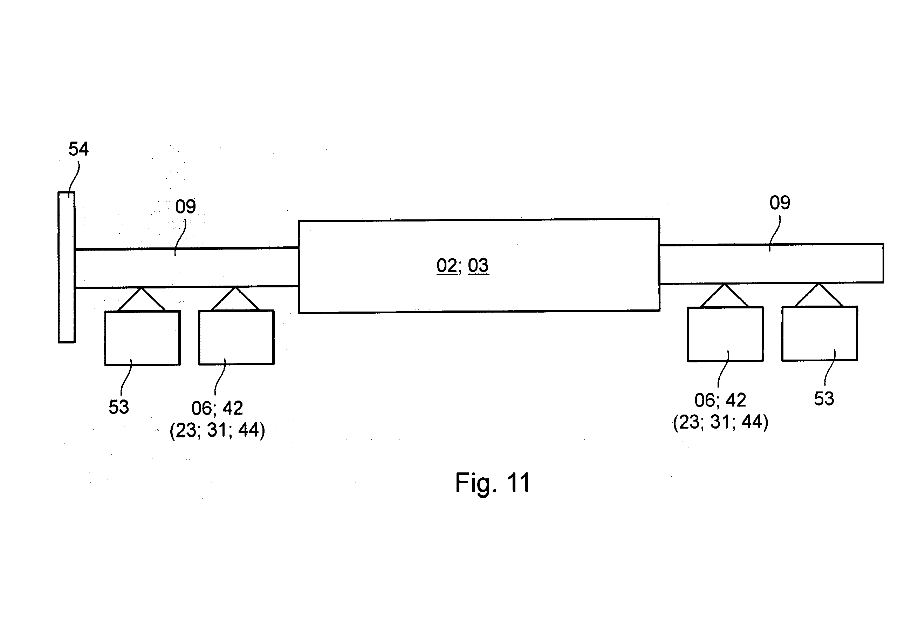

Um die Durchbiegung zu kompensieren wird in einer Weiterbildung (Fig. 11) zu den vorgenannten Ausführungen ein Doppellager, d. h. mit jeweils zwei axial voneinander beabstandeten Lagerstellen, an jedem Zapfen 09 verwendet. Dabei ist vorzugsweise das jeweils näher am Ballen sitzende Lager in der Art einer Lageranordnung 06; 42 mit einem der Schwingung entgegenwirkenden hochdynamischem Aktor 23; 31; 44 (im folgenden "dynamisches Lager" 06; 42) ausgeführt, das weiter entfernte Lager jedoch als Lageranordnung 53 ohne hochdynamischen Aktor 23; 31; 44 (im folgenden "festes Lager" 53). Beide Lagertypen besitzen jedoch eine Druck-An-/Ab-Verstellung. Das feste Lager 53 kann beispielsweise bis auf den Aktor 23; 31; 44 in gleicher Weise zum dynamischen Lager 06; 42 ausgebildet sein. Das dynamische Lager 06; 42 kann hierbei in der Art einer der oben beschriebenen Lagereinheiten 06; 42 aus Fig. 3 bis 10 ausgeführt sein. Im Fall der Lageranordnung 06 gemäß Fig. 6 bis 8 kann das feste Lager 53 ebenfalls entsprechend der Lagereinheit 06 ausgebildet sein, wobei jedoch hierfür Schnellsteuerventile entfallen können.

Der Zapfen 09 zwischen den beiden Lagerstellen bzw. Lagereinheiten 06; 42; 53 eines Doppellagers ist vorteilhaft weich ausgeführt. D. h. der Abstand der beiden Lagerstellen ist groß und/oder der Zapfen 09 mit vergleichsweise geringem Durchmesser ausgebildet, damit bei Radialbewegung durch den Aktor 23; 31; 44 keine großen zusätzlichen Kräfte durch die als Stützlager wirksame zweite Lagereinheit 53 entstehen. Vorteilhaft ist jedoch ein dicker, langer Zapfen 09 gegenüber einem kurzen, dünnen Zapfen 09, da ersterer bei gleicher Biegeweichheit eine größere Torsionssteifheit besitzt.

Sollte am Zapfen 09 zu dessen rotatorischem Antrieb ein Zahnrad 54 angeordnet sein, so ist dieses vorzugsweise nah an der weiter außen liegenden Lagereinheit 53 angeordnet sein. Durch die Nähe des Zahnrads 54 zum _{"}festen" Lager 53 kommt es zu geringerer Drehmomenteinleitung in den Zylinder 02; 03 über den Zahneingriff benachbarter Zahnräder 54.

Durch Verändern der radialen Position der beiden zueinander benachbarten Lager 06; 42 bzw. 53 lässt sich ein statisches Biegemoment einleiten, um die Zylinderbiegung zu kompensieren. Diese Verstellung kann in einer Ausführung durch eine statische Auslenkung des Aktors 23 (insbesondere Piezoaktors 23) erfolgen, welcher die dynamische Auslenkung zur Schwingungsreduktion überlagert. In anderer, besonders im Zusammenhang mit den linear bewegbaren Lagerblöcken 16 der ersten und zweiten Ausführung vorteilhafter Ausgestaltung erfolgt die Einleitung des statischen Biegemomentes durch eine Verstellung der Lagerblöcke 16 der äußeren, insbesondere festen, Lager 53 gegenüber den inneren, insbesondere dynamischen, Lagern 06; 42.

Vorteilhaft zum Einstellen der Gegenbiegung ist dabei eine Kraftmessung in beiden Lagern 06; 42; 53 des Doppellagers.

Bei Ausbildung der Lager 06; 53 mit linear bewegbaren Lagerblöcken 16 und einem Mechanismus mit Verstellantrieb 21 für die An-/Abstellbewegung, welcher ein Anstellen wegdefiniert vornimmt (z. B. Lagereinheit aus Fig. 3 bis 5), kann die Größe der zur Kompensation der statischen Durchbiegung erforderlichen Biegemomenteineinleitung beispielsweise in wie folgt festgelegt werden:

Zunächst werden die Lagerblöcke 16 sämtlicher vier Lager 06 von Druck-Ab- in die Druck-An-Position (z. B. synchron) verfahren. Aus der daraus resultierenden Kraftänderung am äußeren und inneren Lager 06; 53 kann über die Zylindergeometrie (sowie den Abstand zwischen äußerem und innerem Lager 06; 42) die wirkende Linienkraft (sowie das bereits wirkende Gegenbiegemoment) berechnet werden. Das zusätzlich noch notwendige Gegenbiegemoment kann dann durch Verfahren nur der Lagerblöcke 16 der äußeren Lager 53 in Druck-Ab-Richtung über die Zapfenbiegung erzeugt werden.

Im Folgenden ist eine nicht beanspruchte, d.h. zur Erfindung nicht gehörende, besonders geeignete Verfahrensweise (jedoch vorteilhaft auch in Verbindung mit einer hierzu geeigneten Vorrichtung z. B. gemäß Beispiel eins, zwei oder drei und ggf. der doppelten Lageranordnung 06; 42; 53 aus Fig. 11) für eine aktive Schwingungskompensation geschaffen, die folgende Anforderungen erfüllt:
- Die Kompensationsgüte soll unempfindlich gegenüber der Variation folgender Betriebsparameter sein: Drucktuch-Typ, Zustellung (bedingt durch Unterzüge und/oder Drucktuch-Dicken),
- Das Konzept soll auf ein breites Spektrum an Maschinenklassen (Zeitung/Akzidenz) und Formate (Doppel- und Einfachumfang) weitestgehend unverändert anwendbar sein
- Die durch den Kanalschlag entstehenden Schwingungen sollen bei allen Drehzahlen optimal minimiert werden. Optimal bedeutet hierbei nicht zwangsläufig eine vollständige Eliminierung. Vielmehr ist es das Ziel die Schwingungen so niedrig zu halten, dass im Druckprodukt keine Streifen mehr wahrnehmbar sind
- Die Schwingungen sollen über die gesamte Drucklänge minimiert bzw. eliminiert sein.

Diese Anforderungen werden erfüllt durch eine oder mehrere nachfolgenden Punkte:
- Eine Aktorik, die mittels elektrischer Signale in der Größe vorgebbare Kraft- oder Biegemoment am Lager einleitet, wodurch die Biegung des Zylinders dynamisch bzw. statisch verändert werden kann. Die Kraft- oder Biegemomenteinleitung erfolgt hierbei im Wesentlichen nur während der Dauer des Kanalsschlags.
- Eine Sensorik, die in der Lage ist, die Größe vorhandener Schwingungen, insbesondere der Biegegrundschwingung und der ersten und zweiten Biegeoberschwingung, zu detektieren, und in elektrische Signale umzuwandeln.
- Eine adaptive Steuerung, welche aus den aktuellen Sensorsignalen und vorausgegangenen Sensorsignalen die Aktor-Signalvorgaben für den nächsten Überrollungszyklus ableitet. Ist es notwendig mehrere Schwingformen zu reduzieren, so ist das Ziel nicht alle Amplituden vollständig zu eliminieren, sondern aller diese Schwingungen auf ein drucktechnisch irrelevante Größe zu reduzieren.

Zunächst wird in einem vorbereitenden Schritt anhand der geometrischen Abmessungen für die bei Druck-An zu erwartende bzw. gewollte Nippbreite und für die bekannte Kanalbreite ein zu erwartender Kraftverlauf (zeitlich bzw. drehwinkelabhängig) festgelegt. Ein derartiger funktionaler Verlauf bzw. Zusammenhang F₀(ϕ) kann aus theoretischen Überlegungen in ausreichender Genauigkeit nachgebildet werden. Eine absolute Höhe kann über einen Skalierungsfaktor K berücksichtigt werden. Die Funktion sollte vorzugsweise zumindest an ihren an- und absteigenden Flanken einmal differenzierbar sein und durch einen Faktor skalierbar. Durch eine in der Weise gefundene Funktion für den sich theoretisch ergebenden Kanalschlag-Kraftverlauf lassen sich zusammen mit geometrischen Daten mittels maschinendynamischer Berechnungen Aussagen zu Modenform von Eigenschwingungen und zu erwartende Modenamplituden treffen.

Zur Begriffsklärung soll nun folgendes angemerkt werden: Bei einem System gekoppelter Zylinder treten immer mehrere Moden auf, bei denen die Biegform der jeweils einzelnen Einzelzylinder sehr ähnlich sind, die sich "lediglich" durch die Phasenbeziehung der Zylinderbewegungen zueinander unterscheiden. Diese sich ähnlichen Moden wären im vorliegenden Zusammenhang z. B. als "Modengruppe" zu bezeichnen. In der Regel liegen die Frequenzen dieser Moden der "Modengruppe" vergleichsweise eng beieinander (z. B. alle im Bereich 150 ... 200 Hz).

Im vorliegenden Zusammenhang wird nun unter den Bezeichnungen "Grundschwingung", "erste Oberschwingung", "zweite Oberschwingung" etc. nicht einfach alle Moden (inklusive der verschiedenen Moden einer "Modengruppe") nach den Frequenzen aufsteigend gemeint. Die Ordnung im hier bezeichneten Sinne erfolgt nach Modengruppen, d. h. mit erster, zweiter, dritter Oberschwingung ist die erste, zweite, dritte Modengruppe gemeint. Dies entspräche dann sinngemäß so etwas ähnlichem wie den Moden des nichtgekoppelten Zylinders.

Unter Grundschwingung sind somit diejenigen Schwingungsmoden zu verstehen, bei denen die dynamische Biegelinie des individuellen Zylinders zwischen den Lagerstellen im Wesentlichen spiegelsymmetrisch zur Ballenmitte ist und keine Schwingungsknoten auf dem Ballen hat.

Unter erster Oberschwingung sind (alle) diejenigen Schwingungsmoden zu verstehen, bei denen die dynamische Biegelinie des individuellen Zylinders zwischen den Lagerstellen im Wesentlichen punktsymmetrisch zur Ballenmitte ist und genau einen Schwingungsknoten auf dem Ballen hat.

Unter zweiter Oberschwingung sind (alle) diejenigen Schwingungsmoden zu verstehen, bei denen die dynamische Biegelinie des individuellen Zylinders zwischen den Lagerstellen im wesentlichen spiegelsymmetrisch zur Ballenmitte ist und genau zwei Schwingungsknoten auf dem Ballen hat.

Die Schwingfrequenzen der Modengruppen untereinander sind i.d.R. weiter voneinander separiert, als die Schwingfrequenzen innerhalb einer Modengruppe.

Alternativ zur rein theoretischen (geometrische Überlegungen) Festlegung der Form des Kanalschlag-Kraftverlaufs (Zusammenhang F₀(ϕ)) ist eine weitere günstige Ausführungsform der Ermittlung/Festlegung des Kanalkraftverlaufs durch Kraftmessung bei quasistatischer Überrollung, d. h. unterhalb der Anregung einer Schwingung. Dies kann beispielsweise bei Maschinengeschwindigkeiten kleiner 20 m/min, oder z. B. bei Einzugsgeschwindigkeit von 3 bis 8 m/min Maschinengeschwindigkeit (= Umfangsgeschwindigkeit der Zylinder 02; 03) erfolgen.

Für den Aktorkraft-Zeitverlauf wird nun bis auf einen die Höhe bestimmenden Skalierungsfaktor K der aus den o. g. Verfahrensweise (rein theoretisch oder durch Messung) angenommene Kanalschlag-Kraftverlauf vorgegeben und in einer Steuer-und/oder Regeleinrichtung 57 oder einem Kraftverlauf-Generator 59 vorgehalten. Die Steuer- und/oder Regeleinrichtung 57 kann neben entsprechenden Speicher- und/oder Rechenmitteln den Kraftverlauf-Generator 59 mit enthalten. Unter Umständen kann bei Kenntnis der Übertragungsfunktion des Aktors 23; 31; 44 für das vorgehaltene Ausgangssignal bereits die Verzerrung rückwärts berücksichtigt werden, um letztlich den gewünschten Verlauf als Kraft am Aktor 23; 31; 44 zu erhalten. Unter Aktorkraft-Zeitverlauf kann hier gleichbedeutend Aktorkraft-Winkellage-Verlauf verstanden werden, da diese über die Maschinengeschwindigkeit direkt miteinander in Beziehung stehen. Dem Aktor 23; 31; 44 wird vorzugsweise ein Zeitverlauf vorgegeben, der jedoch unter Verwendung des vorgehaltenen Aktorkraft-Winkellage-Verlaufs unter Berücksichtigung der Maschinengeschwindigkeit bzw. Drehzahl etc. gebildet wird.

Unabhängig von der Art der Gewinnung des Kanalschlag-Kraftverlaufs wird somit aus diesem Verlauf ein Aktorkraft-Zeitverlauf bzw. ein Aktorkraft-Winkellage-Verlauf gebildet und als Funktion des Winkels (diskrete Werte einer Tabelle oder als mathematische Funktion) vorgehalten.

Der weiteren Verfahrensweise zugrunde liegt nun die Forderung, dass bei der Minimierung der Schwingung sowohl die durch den Kanalschlag, als auch durch den Aktor 23; 31; 44 selbst verursachte Schwingungsmoden einfließen. Dies erfolgt z. B. dadurch, dass bei der Berechnung der maximalen Amplituden auf dem Ballen auch die entsprechenden Moden Berücksichtigung finden.

Die weitere Vorgehensweise wird beispielhaft anhand der Fig. 12 verdeutlicht.

Während des Betriebes wird nun an wenigstens einer Stelle des Zylinders 02; 03 (inklusive Zapfen 09) mittels eines Sensors 56 (z. B. ein mechanischer Kraftaufnehmer oder eine optische Messung) die Schwingung bzw. die Amplitude an diesem Ort, bzw. eine die Schwingung bzw. die Amplitude an diesem Ort repräsentierende Größe, gemessen. Diese gibt jedoch lediglich die Auslenkung an diesem speziellen Ort wieder und gibt noch keinen direkten Aufschluss über irgendwo auf dem Ballen des Zylinders 02; 03 entstehende Amplituden.

Im nächsten Schritt wird nun - z. B. durch einen Berechnungsalgorithmus in einem Rechenmittel der Steuer- und/oder Regeleinrichtung 57 - rechnerisch die maximale irgendwo auf dem Ballen des Zylinders 02; 03 entstehende Amplitude ermittelt (die ja iterativ minimiert werden soll): Hierzu kann in vorteilhafter Ausführung durch entsprechende Filter das gemessene Signal hinsichtlich der Amplituden der hauptsächlich beteiligten Moden (Grundschwingung und/oder erste Oberschwingung und/oder zweite Oberschwingung in o. g. Sinne) ausgewertet werden. Aus den gemessenen bzw. gefilterten Modenamplituden der Grundschwingung (Kanalschlag) und der durch den Aktor 23; 31; 44 zusätzlich angeregten (zweiten) Oberschwingung(en) (im o. g. Sinne) wird die maximal irgendwo auf dem Ballen entstehende Amplitude berechnet. Dies ist durch die Kenntnis der Modenform der Eigenmoden, welche maschinendynamisch berechnet werden können, möglich (s.o.).

Durch die Steuer- und/oder Regeleinrichtung 57 werden die Aktoren 23; 31; 44 nun entsprechend dem vorgegebenen Aktorkraft-Zeitverlauf (oder Aktorkraft-Winkellage-Verlauf) angesteuert. Dieser Kraft-Zeitverlauf ist somit vorbestimmt und erwirkt im Gegensatz zu einer reinen Regelung (Aktion erst auf eine gemessene Reaktion hin) ein Vorsteuern. Ziel einer sich z. B. anschließenden adaptiven Regelung kann es nun sein, den optimalen Skalierungsfaktor K (Signalhöhe) aufzufinden. Es wird keine Kurvenform oder ein Zeitverlauf durch die Regelung erzeugt, sondern lediglich die Höhe des vorbestimmten Verlaufs angepasst. Die an den verschiedenen Aktoren 23; 31; 44 eines Zylinders 02; 03 eingeleiteten Kräfte stehen für einen gegebenen Kanalschlag vorzugsweise immer im gleichen Verhältnis zu einander. Diese Verhältniszahlen lassen sich aus maschinendynamischen Berechnungen des Systems "Druckwerk mit Aktor" berechnen und dann festhalten. Der gemeinsame Vorfaktor, d. h. Skalierungsfaktor K, wird durch die iterative Optimierung so ermittelt, dass die o.a. maximale Amplitude minimal wird.

Die Krafteinleitung geschieht vorzugsweise lediglich innerhalb des engen Zeitfensters der Kanalüberrollung. Der vorgegebene Aktorkraft-Zeitverlauf (bzw. Aktorkraft-Winkellage-Verlauf) ist entsprechend gewählt.

Die Information über den Rotationszustand der Zylinder 02; 03 wird z. B. durch einen die Drehwinkellage erfassenden Sensor 58, z. B. Drehwinkelgeber, erhalten. Die Zeitdauer der Kanalüberrollung ist damit aufgrund der konstruktiven Voraussetzungen durch einen Kanalschlaganfangs- und Kanalschlagendwinkel erfassbar. Der Zeitpunkt der

Beaufschlagung also steuerbar in Abhängigkeit von der Drehwinkellage.

Als Feedback-Eingangsgröße für die Optimierung wird der Schwingungsverlauf der Zylinderschwingungen durch den geeigneten Sensor 56 (s. unten) von einem Startwinkel > Kanalschlagendwinkel ab, für einen gegebenen Zeitraum oder bis zu einem gegebenen Sensorendwinkel (bevor der nächste Kanalschlag erfolgt), erfasst. Das erhaltene Signal wird auf die Größe der vorhandenen Schwingungen hin analysiert. Vorteilhaft geschieht dies mit einer digitalen Signalverarbeitung, die z. B. die Differenz aufeinanderfolgender Extremwerte bestimmt, und als Ergebnis den absoluten Betrag der ersten dieser Differenzen, oder das Maximum des absoluten Betrages dieser Werte liefert. Dieses Ergebnis wird im folgenden als totale Amplitude bezeichnet.

Grundsätzlich lässt sich das Verfahren auf beliebige Moden separat anwenden. In einer vorteilhaften Ausführung findet aber nur die Amplitude der Kanalschlag-Grundmode(ngruppe) Eingang, sowie in Abhängigkeit von der Krafteinleitungsform ggf. auch die Modenamplitude der zweiten Oberschwingung (nicht gestackerter Kanal) und bei gestackerten Kanälen der ersten Oberschwingung Eingang in die Betrachtung.

Gemäß o. g. ist zur Unterdrückung eines Kanalschlags das Auffinden des geeigneten Skalierungsfaktor K erforderlich, welcher im Rahmen der adaptiv-iterativen Regelung vorteilhaft mit Hilfe der gemessenen Amplitude der Grundschwingung (A0) und der zweiten Moder (A2) iterativ optimiert wird.

Für die Iteration kann folgender Maßen vorgegangen werden:
Zunächst wird mit einen festen Startwert für K begonnen, z. B.
   - entweder K0 = 0 (d. h. keine Aktorwirkung),
   - oder einem festen Referenzwert K_{REF},
   - oder dem Wert des vorausgegangenen Betriebszustandes.

Anschließend werden die beiden hauptsächlich vorhandenen Modenamplituden (z. B. A0 und A2) gemessen bzw. gefiltert und die o. g. Maximalamplitude berechnet, welche sich theoretisch in irgend einem Ort des Zylinders 02; 03 ergibt.

Dann wird der Skalierungsfaktor K um einen Betrag ΔK erhöht. Die Größe von ΔK kann grundsätzlich
- entweder fest vorgegeben werden,
- oder im Sinne einer adaptiven Schrittweitensteuerung selbst Ziel einer Optimierung sein.

Die feste Vorgabe stellt eine vorteilhafte Vorgehensweise dar. Die Größe von ΔK wird dabei z. B. wie folgt festgelegt:
Durch eine Aktor-Krafteinleitung mit K = ΔK ohne Kanalüberrollung erfolgt eine Schwingungsanregung der Zylinder 02; 03. Die Größe der hierdurch in den Schwingungsempfindlichen Nipps entstehenden totalen Schwingungsamplituden der Zylinder-Relativbewegung soll deutlich (z. B. um einen (Sicherheits)faktor > 5 unter dem kritischen Grenzwert für die Schwingungsstreifen-Entstehung liegen. Da die entstehenden Amplituden aus maschinendynamischen Betrachtungen vorausberechnet werden kann, ist diese Festlegung vorab immer möglich. Alternativ kann dieser Wert z. B. im Rahmen der Inbetriebnahme der Maschine, auch durch Messung der Schwingungsamplituden erhalten werden. Damit z. B. bei der Startwert-Wahl K0 nicht zu viele Iterationen notwendig sind, ist der Sicherheitsfaktor auch nicht zu groß (z. B. < 10) zu wählen.

Im folgenden Iterationsschritt werden die maximalen Modenamplituden (wie oben beschrieben aus den gemessenen berechnet) der aufeinander folgenden Schritte miteinander verglichen.

In Abhängigkeit vom Vorzeichen der Amplitudenänderung, d. h. der Differenz zwischen letzter und neu festgestellter Maximalamplitude wird dann entschieden, ob eine Vorzeichenänderung von ΔK erforderlich ist und es wird der Skalierungsfaktor K der Krafteinleitung geändert zu K+ ΔK. Damit endet der Iterationsschritt i, und beginnt der Schritt i+1. Die Zeitdauer für die Ausführung eines Iterationsschrittes liegt vorteilhaft bei einem Zylinder-Rotationszyklus. Durch die Wahl der Größe von ΔK ist gewährleistet, das auch bei Geschwindigkeitsänderungen mit typischen Beschleunigungen von » 40.000 U/h/min das Schwingungsminimum kontinuierlich gehalten werden kann.

Da es sich bei den Kanalschlag-Eigenmoden um Systemeigenschwingungen handelt, ist es nicht erforderlich
- die Schwingungen an allen Zylindern 02; 03 zu detektieren. Solange die Kopplungen zwischen den Zylindern 02; 03 hinreichend stark sind (die Zylindersteifheit im Vergleich zur Drucktuch-Federkonstante also klein ist), kann es sogar ausreichend sein, die Schwingungen nur an einem Zylinder 02; 03 zu detektieren, um ein hinreichend großes Messsignal zu erhalten. In der Regel wird es aber notwendig sein, die Detektion an einem unmittelbar am Kanalschlag beteiligten Zylinder (d. h. einem der beiden Zylinder, die den Nipp bilden, in welchem der Kanalschlag stattfindet) durchzuführen.
- mehr als einen Sensor 56 zur Detektion einer Mode zu verwenden, denn die Amplitudenverhältnisse im gesamten System sind bereits durch die Amplitude an einer Stelle eindeutig bestimmt. In Bezug auf den Ort der Detektion gilt, dass diese nicht in einem Schwingungsknoten der entsprechenden Messgröße liegen darf. Bei einer Wegmessung ist im Interesse eines hinreichend großen Messsignals ein Schwingungsmaximum besonders günstig. Dies wäre für die Kanalschlag-Eigenmoden etwa in Ballenmitte. Allerdings ist dieser Ort aus Bauraumaspekten, sowie in Bezug auf die Halterung (mögliche Sensor-Schwingungen) ungünstig. Bei einer nicht zu hohen Lagersteifheit ist auch eine Messung im Lager (z. B. in der Lageranordnung 06; 42) bzw. in Lagernähe möglich.
- für jede Mode einen eigenen Sensor 56 vorzusehen, denn die Eigenmoden können durch Filtern (Bandpass) aus einem Signal erhalten werden. Problematisch ist dies allerdings dann, wenn die Eigenfrequenzen so eng benachbart sind, dass diese aufgrund der Kantensteilheit des Filters nicht getrennt werden können (bzw. das
- Messsignal der einzelnen Mode durch zu hohe Kantensteilheit verfälscht wird). In diesem Fall bietet es sich an, die Signale zweier (oder mehrerer) Sensoren durch Bildung von Linearkombinationen der Messsignale zu verknüpfen, um die einzelnen Moden isoliert zu erhalten.

Zur Unterdrückung von Schwingungen, die nicht zu den Kanalschlag-Eigenmoden gehören (z. B. Gestellschwingungen), sowie anderer Störungen (Rundlauf/Unwuchten, Sensor-Rauschen) ist es generell vorteilhaft, ein Hoch- oder Bandpass-Filter zu verwenden, der nur die Kanalschlag-Eigenmoden durchlässt.

Bei einem indirekten Druckverfahren (wie dem Offsetdruck), bei dem der Übertragungszylinder 02 Kanäle besitzt, ist es zur Minimierung der Anzahl der notwendigen Sensoren 56 vorteilhaft, die Schwingungen nur am Übertragungszylinder 02 zu detektieren, da dieser an den Kanalschlägen in beiden Nipps (Formzylinder-Übertragungszylinder und Übertragungszylinder-Gegendruckzylinder) unmittelbar beteiligt ist.

Durch die endliche Aktorsteifheit ist die Lagersteifheit gegenüber üblicher Lagerung (z. B. direkt im Gestell) herabgesetzt, so dass auch eine Messung der Bewegung im Bereich der Lageranordnung 06; 42 möglich ist. Alternativ ist eine Messung der Lagerkräfte (z. B. über Dehnungsmessstreifen (DMS) oder über den Aktor 23; 31; 44 selbst) möglich. Im Falle einer Biegemoment-Einleitung über den Zapfen 09 kann grundsätzlich z. B. auch das Biegemoment durch DMS-Streifen am Zapfen 09 detektiert werden. Die Signalübertragung der Detektion am rotierenden Zapfen 09 stellt dann aber einen erhöhten Aufwand dar.

Bei gestackerten Kanälen (Kanäle, welche sich lediglich über einen Teil der Zylinderlänge erstrecken, jedoch in Umfangsrichtung zueinander versetzt sind) ist schließlich die Detektion an beiden stirnsteitigen Lagerstellen (z. B. Lageranordnungen 06; 42) vorteilhaft, da durch Summenbildung der beiden Signale die Grundschwingung und geradzahligen Oberschwingungen, und durch Differenzbildung die erste Oberschwingung und ungradzahligen Oberschwingungen erhalten werden kann. Die Amplituden der in diesen beiden Signalen enthaltenen Moden können dann ggf. wiederum durch o.a. Filtermethoden erhalten werden. Somit lassen sich die Modenamplituden bestimmen.

Vorteilhafte Ausgestaltungen des Aktors 23 (31; 44) sind:
- eine große Dynamik (Anstieg/Abfall innerhalb der Kanalschlagdauer). Die Definitionen der Kanalschlag- und Aktor-Kraftverläufe mit Skalierungsfaktor K stellen "minimale" Dynamik bei vorgegebener Zeitdauer (Kanalschlagdauer) dar. Für übliche schmale Kanäle von 3 mm Breite bedeutet dies einen Anstieg/Abfall innerhalb der Kanalschlagdauer von 0.002 s, bei schnelllaufenden Maschinen auch kleiner oder gleich 0.00019 s. Treten drucktechnisch unzulässig große Schwingungsamplituden nur bei niedrigen Drehzahlen auf, können diese Anforderungen um einen Faktor 2..3 reduziert werden, d. h. die geforderte Zeit für den Anstieg/Abfall größer sein.
- Die Kraft- und Weganforderungen hängen von der Krafteinleitungsform ab.
   Im Allgemeinen wird die Ansteuerung der Aktoren 23; 44 (31); elektrisch durch eine Steuerspannung (oder Strom) erfolgen, z. B. über einen D/A-Wandler. Dann kann es günstig sein, das Übertragungsverhalten der Aktoren selbst (aufgrund der Massenträgheit (Aktor-Eigenfrequnezen) und/oder der Ansteuereinheit (Grenzfrequenz des Verstärkers) bei der Vorgabe der Steuerspannung (-strom) durch Rückrechnung bereits zu berücksichtigen, damit der gewünschte Kraftverlauf gemäß der Vorgaben auch realisiert wird.

Die für die aktive Schwingungsdämpfung einzusetzenden Aktoren 23; 31; 44 weisen vorzugsweise eine sehr schnelle Ansprechzeit (Reaktion für einen Zyklus > 100 Hz, besonders > 300 Hz) und eine hohe Steifheit auf.

Vorzugsweise ist ein Weg von mindestens 20 µm, vorteilhaft < 40 µm je Aktor zu leisten.

Vorzugsweise werden für die Schwingungsreduktion andere Aktoren 23; 44 verwendet als die für die An/Abstellbewegung verantwortlichen Antriebe (erstes und drittes Beispiel).

Für die Ausführung eines gemeinsamen Antriebes für die Schwingungskompensation und die An-Abstell-Bewegung muss der dort eingesetzte Aktor 31 für kurze Wege ausreichend schnelle Reaktionszykluszeiten besitzen (zweites Beispiel).

Als Aktoren 23; 44 können anstatt der genannten Piezoaktoren 23; 44 in den vorgenannten Beispielen auch als Elektromagnete ausgebildete Aktoren 23; 44 zum Einsatz kommen.

### Bezugszeichenliste

- 01: Druckwerk, Doppeldruckwerk
- 02: Zylinder, Übertragungszylinder, Druckwerkszylinder
- 03: Zylinder, Formzylinder, Druckwerkszylinder
- 04: Zylindereinheit
- 05: Nippstelle
- 06: Lageranordnung, Lagereinheit, Linearlagereinheit, Lager
- 07: Seitengestell
- 08: Seitengestell
- 09: Zapfen
- 10: Kanal
- 11: Getriebe
- 12: Radiallager, Zylinderrollenlager
- 13: Lagermittel, Lagerelement
- 14: Lagermittel, Lagerelement
- 15: -
- 16: Lagerblock, Schlitten
- 17: Träger
- 18: Ausnehmung
- 19: Aussparung, Durchbruch
- 20: Antriebswelle
- 21: Stellmittel, Verstellantrieb, Schrittmotor, Motor, Aktor
- 22: Welle
- 23: Aktor, Piezoaktor
- 24: Federelement
- 25: -
- 26: Montagehilfe, Passstift
- 27: Haltemittel, Schraube
- 28: Mittel, Spannschraube
- 29: Abdeckung
- 30 - 31: Aktor, Stellmittel, Kolben, Hydraulikkolben
- 32: Anschlag
- 33: Anschlagfläche
- 34: Stellmittel, Aktor
- 35: -
- 36: Element, Federelement
- 37: Ventil
- 38: Anschlag, Überlastsicherung, Federelement
- 39: Anschlag, Keil
- 40: Aktor, Piezoaktor
- 41: Rückstellfeder
- 42: Lageranordnung, Lagereinheit, Radiallager, Mehrringlager, Lager
- 43: Ring, Zwischenring
- 44: Aktor, Piezoelement
- 45: -
- 46: Ring, Innenring
- 47: Wälzkörper
- 48: Ring, außen
- 49: Ring, innen
- 50: -
- 51: Radiallager, Gleitlager, Nadellager
- 52: Außenring
- 53: Lageranordnung, Lagereinheit, Lager
- 54: Zahnrad
- 55: Zwischenraum
- 56: Sensor
- 57: Regel- und/oder Steuereinrichtung, Steuerung
- 58: Sensor
- 59: Kraftverlauf-Generator

- A0: Grundschwingung
- A2: Moder

- B06: Breite

- L02: Länge
- L03: Länge
- L06: Länge

- D: Durchmesser
- E: Ebene, Verbindungslinie, Verbindungsebene
- F: Kraft
- K: Skalierungsfaktor
- P: Druck
- S: Stellrichtung

- LW: lichte Weite

- b_{K}: Breite (10)
- b_{N}: Breite (05)

- ΔK: Betrag

- β: Winkel

## Patentansprüche

1. Anordnung eines Zylinders (02; 03) einer bahnverarbeitenden Maschine, insbesondere Rotationsdruckmaschine, zur Schwingungsreduktion des Zylinders (02; 03), wobei die Anordnung einen Aktor (23; 31; 44) zur mittelbaren oder unmittelbaren Kraftbeaufschlagung des Zylinders (02; 03) oder eines Zapfens (09) umfasst, und wobei der Zylinder (02; 03) mit seinen Zapfen (09) in einem zum Druck-An- bzw. Druck-Abstellen linear bewegbaren, ein Radiallager (12) aufweisenden Lagerblock (16) gelagert ist, **dadurch gekennzeichnet, dass** der Aktor (23; 31; 44) im zum Druck-An- bzw. Druck-Abstellen linear bewegbaren Lagerblock (16) integriert und bei Bewegung des Lagerblockes (16) mitbewegt ist.

2. Anordnung nach Anspruch 1, **dadurch gekennzeichnet, dass** neben dem Aktor (23; 31; 44) ein von diesem verschiedener eine An-/Abstellbewegung des Zylinders (02, 03) bewerkstellender Antrieb vorgesehen ist.

3. Anordnung nach Anspruch 1, **dadurch gekennzeichnet, dass** der Aktor (23) als Piezoaktor (23) ausgebildet ist.

4. Anordnung nach Anspruch 1, **dadurch gekennzeichnet, dass** die Lagerung als Lagereinheit (06) in der Art einer als Ganzes montierbaren Baueinheit ausgeführt ist, welche neben dem Rotationslager (12) beide die Relativbewegung des Lagerblockes (16) ermöglichenden zusammen wirkenden Lagerelemente (13; 14) umfasst.

5. Anordnung nach Anspruch 4, **dadurch gekennzeichnet, dass** in der als Ganzes montierbaren Lagereinheit (06) zumindest ein die Relativbewegung zwischen gestellfestem und beweglichem Lagerteil bewerkstellendes Getriebe (11) integriert ist.

6. Anordnung nach Anspruch 5, **dadurch gekennzeichnet, dass** das Getriebe (11) Mittel umfasst, welche eine von einem außerhalb der Lagereinheit (06) angeordneten Stellmittel (21) auf ein Glied des Getriebes (11) eingebrachte Stellbewegung in eine lineare Bewegung des Lagerblocks (16) umformt.

7. Anordnung nach Anspruch 1, **dadurch gekennzeichnet, dass** der Aktor (23; 31; 44) mit einer Steuer- und/oder Regeleinrichtung (57) in Signalverbindung steht, in welcher ein Aktorkraft-Winkellage-Verlauf vorgehalten ist.

8. Anordnung nach Anspruch 7, **dadurch gekennzeichnet, dass** die Steuer- und/oder Regeleinrichtung (57) mit einem Sensor (56) in Signalverbindung steht, welcher dazu ausgebildet ist eine die Schwingung an einem Ort des Zylinders (02; 03) oder des Zapfens (09) charakterisierende Größe an die Steuer- und/oder Regeleinrichtung (57) zu liefern.

9. Anordnung nach Anspruch 7, **dadurch gekennzeichnet, dass** ein Kraftverlauf-Generator vorgesehen ist, durch welchen eine Ansteuerung des Aktor (23; 31; 44) erfolgt.

10. Anordnung nach Anspruch 1, **dadurch gekennzeichnet, dass** im Lagerblock (16) ein Federelement (24), insbesondere Tellerfederpaket, vorgesehen ist.

11. Anordnung nach Anspruch 1, **dadurch gekennzeichnet, dass** der Aktor (23; 31; 44) bzgl. seiner Wirkrichtung im Wesentlichen in radialer Richtung zum Zapfen (09) hin orientiert ist.

12. Anordnung nach Anspruch 10, **dadurch gekennzeichnet, dass** das Federelement (24) bzgl. seiner Wirkrichtung im Wesentlichen in radialer Richtung zum Zapfen (09) hin orientiert ist.

13. Anordnung nach Anspruch 2, **dadurch gekennzeichnet, dass** der die An/Abstellbewegung des Zylinders (02; 03) bewerkstellende Antrieb ein mechanisches Getriebe und einen Verstellantrieb (21), insbesondere Verstellmotor, aufweist.

14. Anordnung nach Anspruch 2, **dadurch gekennzeichnet, dass** der die An/Abstellbewegung des Zylinders (02; 03) bewerkstellende Antrieb wenigstens einen kraftsteuerbaren Aktor (31), insbesondere ein durch Druckmittel betätigbares Stellmittel (31), aufweist.

15. Anordnung nach einem der Ansprüche 1 bis 10, **dadurch gekennzeichnet, dass** ein stirnseitiger Zapfen (09) des Zylinders (02; 03) gleichzeitig in einem zylindernäheren und einem zylinderferneren Lager (06; 42) gelagert ist, dass mindestens eines der Lager (06; 42) den Aktor (23; 31; 44) zur mittelbaren oder unmittelbaren Kraftbeaufschlagung des Zylinders (02; 03) oder eines Zapfens (09) aufweist, und dass der Aktor (23; 31; 44) mit einem Kraftverlauf-Generator (59) in Signalverbindung steht, durch welchen dem Aktor (23; 31; 44) ein vorgehaltener Kraftverlauf in Abhängigkeit von der Zeit oder einem Drehwinkel des Zylinders (02; 03) beaufschlagbar ist.

16. Anordnung nach Anspruch 15, **dadurch gekennzeichnet, dass** das zylinderferne Lager (53) lediglich einen eine Druck-An/Ab-Stellung bewerkstellenden Antrieb aufweist.

## Claims

1. Arrangement of a cylinder (02; 03) of a web-processing machine, in particular a rotary printing press, for reducing the vibration of the cylinder (02; 03), the arrangement comprising an actuator (23; 31; 44) for indirect or direct force loading of the cylinder (02; 03) or a journal (09), and the cylinder (02; 03) being mounted with its journal (09) in a bearing block (16) which has a radial bearing (12) and can be moved linearly for throwing on or throwing off, **characterized in that** the actuator (23; 31; 44) is integrated in the bearing block (16) which can be moved linearly for throwing on or throwing off, and is also moved when the bearing block (16) is moved.

2. Arrangement according to Claim 1, **characterized in that**, in addition to the actuator (23; 31; 44), a drive is provided which is different from the former and brings about a throwing-on/off movement of the cylinder (02, 03).

3. Arrangement according to Claim 1, **characterized in that** the actuator (23) is configured as a piezo-electric actuator (23).

4. Arrangement according to Claim 1, **characterized in that** the mounting is configured as a bearing unit (06) in the manner of a structural unit which can be mounted in its entirety, which bearing unit (06), in addition to the rotary bearing (12), comprises both interacting bearing elements (13; 14) which make the relative movement of the bearing block (16) possible.

5. Arrangement according to Claim 4, **characterized in that** at least one gear mechanism (11) which brings about the relative movement between the bearing part fixed to the frame and the movable bearing part is integrated in the bearing unit (06) which can be mounted in its entirety.

6. Arrangement according to Claim 5, **characterized in that** the gear mechanism (11) comprises a means which converts an actuating movement, which is imparted to an element of the gear mechanism (11) by an actuating means (21) which is arranged outside the bearing unit (06), into a linear movement of the bearing block (16).

7. Arrangement according to Claim 1, **characterized in that** the actuator (23; 31; 44) is signal-connected to a control and/or regulating device (57), in which an actuator force/angular position profile is stored.

8. Arrangement according to Claim 7, **characterized in that** the control and/or regulating device (57) is signal-connected to a sensor (56) which is configured for supplying a variable which characterizes the vibration at a location of the cylinder (02; 03) or of the journal (09) to the control and/or regulating device (57).

9. Arrangement according to Claim 7, **characterized in that** a force-progression generator is provided, by way of which an actuation of the actuator (23; 31; 44) takes place.

10. Arrangement according to Claim 1, **characterized in that** a spring element (24), in particular a disc-spring assembly, is provided in the bearing block (16).

11. Arrangement according to Claim 1, **characterized in that**, with regard to its direction of action, the actuator (23; 31; 44) is oriented substantially in the radial direction towards the journal (09).

12. Arrangement according to Claim 10, **characterized in that**, with regard to its direction of action, the spring element (24) is oriented substantially in the radial direction towards the journal (09).

13. Arrangement according to Claim 2, **characterized in that** the drive which brings about the throwing-on/off movement of the cylinder (02; 03) has a mechanical gear mechanism and an adjusting drive (21), in particular an adjusting motor.

14. Arrangement according to Claim 2, **characterized in that** the drive which brings about the throwing-on/off movement of the cylinder (02; 03) has at least one controllable-force actuator (31), in particular an actuating means (31) which can be actuated by pressure medium.

15. Arrangement according to one of Claims 1 to 10, **characterized in that** an end-side journal (09) of the cylinder (02; 03) is mounted at the same time in a bearing which is closer to the cylinder and a bearing which is further away from the cylinder (06; 42), **in that** at least one of the bearings (06; 42) has the actuator (23; 31; 44) for indirect or direct force loading of the cylinder (02; 03) or a journal (09), and **in that** the actuator (23; 31; 44) is signal-connected to a force-progression generator (59), by way of which the actuator (23; 31; 44) can be loaded with a stored force progression as a function of time or a rotary angle of the cylinder (02; 03).

16. Arrangement according to Claim 15, **characterized in that** the bearing (53) which is remote from the cylinder has only one drive which brings about a thrown-on/off position.

## Revendications

1. Agencement d'un cylindre (02 ; 03) d'une machine de traitement de bandes, en particulier machine à imprimer rotative, pour réduire les vibrations du cylindre (02 ; 03), l'agencement comprenant un actionneur (23 ; 31 ; 44), pour solliciter, indirectement ou directement, par des efforts, le cylindre (02 ; 03) ou un tourillon (09), et le cylindre (02 ; 03), avec son tourillon (09), étant monté en palier dans un bloc palier (16), présentant un palier radial (12), déplaçable de manière linéaire pour se trouver en pressage, ou en dégagement de pressage, **caractérisé en ce que** l'actionneur (23 ; 31 ; 44) est intégré dans le bloc palier (16) déplaçable de manière linéaire pour se trouver en pressage, ou en dégagement de pressage, et est déplacé conjointement en cas de déplacement du bloc palier (16).

2. Agencement selon la revendication 1, **caractérisé en ce que**, outre l'actionneur (23 ; 31 ; 44), un entraînement, différent de celui-ci, provoquant un passage en position pressée/dégagée du cylindre (02, 03), est prévu.

3. Agencement selon la revendication 1, **caractérisé en ce que** l'actionneur (23) est réalisé sous forme de piézoactionneur.

4. Agencement selon la revendication 1, **caractérisé en ce que** le montage en palier est réalisé en tant qu'unité de palier (06), à la manière d'une unité de construction susceptible d'être montée d'un tout, qui, outre le palier de rotation (12), comprend les deux éléments de palier (13 ; 14) coopérant, permettant le déplacement relatif du bloc palier (16).

5. Agencement selon la revendication 4, **caractérisé en ce qu'**au moins une transmission (11), provoquant le déplacement relatif entre partie de palier fixe par rapport au bâti et partie de palier mobile, est intégrée dans l'unité de palier (06) susceptible d'être montée d'un tout.

6. Agencement selon la revendication 5, **caractérisé en ce que** la transmission (11) comprend des moyens, transformant un déplacement de réglage, introduit sur un élément de la transmission (11) par un moyen de réglage (21) disposé à l'extérieur de l'unité de palier (06), en un déplacement linéaire du bloc palier (16).

7. Agencement selon la revendication 1, **caractérisé en ce que** l'actionneur (23 ; 31 ; 44) est placé en liaison de signalisation avec un dispositif de commande et/ou de régulation (57), dans lequel une allure de force d'actionneur-position angulaire est stockée.

8. Agencement selon la revendication 7, **caractérisé en ce que** le dispositif de commande et/ou de régulation (57) est placé en liaison de signalisation avec un capteur (56), réalisé pour fournir au dispositif de commande et/ou de régulation (57) une grandeur caractérisant la vibration en un emplacement du cylindre (02 ; 03) ou du tourillon (09).

9. Agencement selon la revendication 7, **caractérisé en ce qu'**un générateur d'allure de force est prévu, au moyen duquel est effectuée une commande de l'actionneur (23 ; 31 ; 44).

10. Agencement selon la revendication 1, **caractérisé en ce qu'**un élément élastique (24), en particulier un paquet de ressorts-disques, est prévu dans le bloc palier (16).

11. Agencement selon la revendication 1, **caractérisé en ce que** l'actionneur (23 ; 31 ; 44), ou sa direction d'action, est orienté(e) sensiblement en direction radiale par rapport au tourillon (09).

12. Agencement selon la revendication 10, **caractérisé en ce que** l'élément élastique, ou sa direction d'action, est orienté(e) sensiblement en direction radiale par rapport au tourillon (09).

13. Agencement selon la revendication 2, **caractérisé en ce que** l'entraînement provoquant le déplacement en position pressée/dégagée du cylindre (02, 03) présente une transmission mécanique et un entraînement de manoeuvre (21), en particulier un moteur de manoeuvre.

14. Agencement selon la revendication 2, **caractérisé en ce que** l'entraînement provoquant le déplacement en position pressée/dégagée du cylindre (02, 03) présente au moins un actionneur (31) dont la force peut être commandée, en particulier un moyen de réglage (31) susceptible d'être actionné par un fluide sous pression.

15. Agencement selon l'une des revendications 1 à 10, **caractérisé en ce qu'**un tourillon (09), situé côté frontal, du cylindre (02, 03) est simultanément monté en palier dans un palier plus proche du cylindre et un autre plus éloigné du cylindre (06 ; 42), **en ce qu'**au moins l'un des paliers (06 ; 42) présente l'actionneur (23 ; 31 ; 44), pour solliciter, indirectement ou directement, par des efforts, le cylindre (02 ; 03) ou un tourillon (09), et **en ce que** l'actionneur (23 ; 31 ; 44) est placé en liaison de signalisation avec un générateur d'allure de force (59), au moyen duquel l'actionneur (23 ; 31 ; 44) est susceptible d'être sollicité par une allure de force, tenue en stock, en fonction du temps ou d'un angle de rotation du cylindre (02 ; 03).

16. Agencement selon la revendication 15, **caractérisé en ce que** le palier (53) éloigné du cylindre présente seulement un dispositif d'entraînement provoquant un placement en position pressée/dégagée.
